# EUROPEAN PATENT APPLICATION

(11) **EP 4 723 733 A1**
(43) Date of publication of application: **08.04.2026**
(21) Application number: 24822669.8
(22) Date of filing: 11.06.2024
(51) Int. Cl.: H04W 36/00

(54) **HANDOVER METHOD AND COMMUNICATION APPARATUS**

(30) Priority: 15.06.2023 CN 202310718509
(71) Applicant: Huawei Technologies Co., Ltd., Shenzhen, Guangdong 518129 (CN)
(72) Inventor: GU, Zhifang, Shenzhen, Guangdong 518129 (CN); YOU, Chunhua, Shenzhen, Guangdong 518129 (CN); FAN, Qiang, Shenzhen, Guangdong 518129 (CN)
(74) Representative: Maiwald GmbH
(86) International application number: PCT/CN2024/098315
(87) International publication number: WO 2024/255719

(57) **Abstract**

This application provides a handover method and a communication apparatus. Switching of a user plane bearer of a terminal device may be initiated based on a notification message indicating a target cell to which the terminal device is to be handed over. In other words, the switching of the user plane bearer of the terminal device may be triggered by the notification message. The switching of the user plane bearer of the terminal device can be performed earlier than switching of the user plane bearer of the terminal device that is initiated after an indication indicating that the terminal device successfully accesses the target cell is received. After the switching of the user plane bearer of the terminal device is performed, service data of the terminal device can be directly sent to a target access network device without forwarding of a source access network device. Therefore, data in a data forwarding process from the source access network device to the target access network device can be reduced, thereby reducing invalid data and improving service experience.

## Description

This application claims priority to Chinese Patent Application No. 202310718509.9, filed with the China National Intellectual Property Administration on June 15, 2023 and entitled "HANDOVER METHOD AND COMMUNICATION APPARATUS", which is incorporated herein by reference in its entirety.

### TECHNICAL FIELD

This application relates to the field of communication technologies, and more specifically, to a handover method and a communication apparatus.

### BACKGROUND

In a mobile communication system, movement of a location of a terminal device may cause a change of a communication link between the terminal device and a network device, and the network device indicates, based on a movement status of the terminal device, the terminal device to perform cell handover.

In a handover process, there is a process in which downlink data is forwarded from a source access network device to a target access network device, and then the target access network device sends the data to the terminal device. The process in which the data is forwarded by the source access network device to the target access network device causes a delay, and the delay may cause the data to be invalid when the data arrives at the terminal device, affecting service experience.

### SUMMARY

This application provides a handover method and a communication apparatus, to reduce data in data forwarding, thereby reducing invalid data and improving service experience.

According to a first aspect, a handover method is provided. The method may be performed by a source central unit (central unit, CU), or may be performed by a module or unit (for example, a chip or a circuit) in the source CU. The following uses the source CU for description.

The method includes: The source CU receives a first notification message from a source distributed unit (distributed unit, DU). The first notification message indicates a target cell to which a terminal device is to be handed over, and the target cell is a cell of a target DU of a target CU. The source CU sends a first request message to a core network device based on the first notification message. The first request message is used to request to switch a user plane bearer of the terminal device to the target CU.

Based on the foregoing method, the source CU may initiate switching of the user plane bearer of the terminal device based on the first notification message indicating the target cell to which the terminal device is to be handed over. In other words, the switching of the user plane bearer of the terminal device may be triggered by the first notification message. The switching of the user plane bearer of the terminal device in the foregoing method can be performed earlier than switching of the user plane bearer of the terminal device initiated after an indication indicating that the terminal device successfully accesses the target cell is received. After the switching of the user plane bearer of the terminal device is performed, service data of the terminal device can be directly sent to the target CU without a data forwarding process from the source CU to the target CU. Therefore, according to the foregoing method, data forwarded by the source CU to the target CU can be reduced, thereby reducing invalid data and improving service experience.

With reference to the first aspect, in a possible implementation, the first notification message includes a first identifier of the target cell. That the source CU sends the first request message to the core network device based on the first notification message includes: The source CU sends the first request message to the core network device based on the first identifier and a first association relationship. The first association relationship indicates an association relationship between the first identifier and first information, the first information indicates channel information of a user plane bearer of the target CU, and the first request message includes the first information.

Based on the foregoing method, the source CU may obtain the channel information of the user plane bearer of the target CU based on the first identifier of the target cell and the first association relationship indicating the channel information of the user plane bearer of the target CU, so that the channel information of the user plane bearer of the target CU can be provided to the core network device, and the source CU can initiate switching of the user plane bearer of the terminal device.

With reference to the first aspect or any implementation of the first aspect, in another possible implementation, before the source CU receives the first notification message, the method further includes: The source CU sends a second request message to the target CU. The second request message is used to request the first information. The source CU receives a second response message from the target CU. The second response message includes a second identifier of the target cell and the first information. The source CU determines the first association relationship based on the second identifier and the first information.

Based on the foregoing method, the first association relationship may be preconfigured for the source CU before the source CU sends the first request message to the core network device. In this way, a delay of initiating switching of the user plane bearer of the terminal device can be reduced.

With reference to the first aspect or any implementation of the first aspect, in another possible implementation, the first notification message includes a first identifier of the target cell. That the source CU sends the first request message to the core network device based on the first notification message includes: The source CU determines, based on the first identifier, an identifier of the target CU to which the target cell belongs. The source CU sends the first request message to the core network device based on the identifier of the target CU and a second association relationship. The second association relationship indicates an association relationship between the identifier of the target CU and first information, the first information indicates channel information of a user plane bearer of the target CU, and the first request message includes the first information.

Based on the foregoing method, the source CU may obtain the channel information of the user plane bearer of the target CU based on the first identifier of the target cell, the target CU, and the second association relationship indicating the channel information of the user plane bearer of the target CU, so that the channel information of the user plane bearer of the target CU can be provided to the core network device, and the source CU can initiate switching of the user plane bearer of the terminal device.

With reference to the first aspect or any implementation of the first aspect, in another possible implementation, before the source CU sends the first request message to the core network device based on the first notification message, the method further includes: The source CU sends a second request message to the target CU. The second request message is used to request the first information. The source CU receives a second response message from the target CU. The second response message includes the identifier of the target CU and the first information. The source CU determines the second association relationship based on the identifier of the target CU and the first information.

Based on the foregoing method, the second association relationship may be preconfigured for the source CU before the source CU sends the first request message to the core network device. In this way, a delay of initiating switching of the user plane bearer of the terminal device can be reduced.

With reference to the first aspect or any implementation of the first aspect, in another possible implementation, the second request message further includes second information, and the second information is used to request to initiate path switch by the source CU; and the second response message further includes third information, and the third information indicates that the source CU is allowed to initiate path switch.

Based on the foregoing method, the source CU may determine, through negotiation with the target CU, that the source CU is to initiate switching of the user plane bearer of the terminal device, so that a more appropriate CU initiates switching of the user plane bearer of the terminal device.

With reference to the first aspect or any implementation of the first aspect, in another possible implementation, the second request message further includes fourth information, and the fourth information indicates that the source CU is to initiate path switch.

In other words, when determining to initiate switching of the user plane bearer of the terminal device, the source CU notifies the target CU, and does not need to be confirmed or permitted by the target CU.

With reference to the first aspect or any implementation of the first aspect, in another possible implementation, the method further includes: The source CU sends at least one association relationship to a candidate CU. The candidate CU includes the target CU, and the at least one association relationship includes the first association relationship.

Based on this, when serving as a source CU in subsequent handover, the target CU may not need to reobtain an association relationship between a candidate cell and channel information of a user plane bearer of a corresponding candidate CU, so that signaling overheads can be reduced, and a subsequent handover process and a corresponding path switch process can be quickly performed.

With reference to the first aspect or any implementation of the first aspect, in another possible implementation, the first information includes at least one of the following information: an internet protocol (Internet Protocol, IP) address of a downlink termination point of the user plane bearer of the target CU, or a GPRS tunneling protocol-tunnel endpoint identifier (GPRS tunneling protocol-tunnel endpoint identifier, GTP-TEID) of the downlink termination point of the user plane bearer of the target CU. The GPRS is a general packet radio system (general packet radio system).

With reference to the first aspect or any implementation of the first aspect, in another possible implementation, the method further includes: The source CU forwards service data of the terminal device to the target CU based on the first notification message.

With reference to the first aspect or any implementation of the first aspect, in another possible implementation, the method further includes: The source CU sends a second notification message to the target CU. The second notification message indicates the target cell to which the terminal device is to be handed over.

With reference to the first aspect or any implementation of the first aspect, in another possible implementation, the second notification message includes at least one of the following information: the first identifier of the target cell, beam information, or access information. The beam information indicates a beam direction in which the target cell communicates with the terminal device, and the access information indicates an access manner in which the terminal device accesses the target cell.

With reference to the first aspect or any implementation of the first aspect, in another possible implementation, the method further includes: The source CU sends a correspondence between the first identifier of the target cell and the second identifier of the target cell to the target CU. The first identifier is an identifier of the target cell on an air interface, and the second identifier is an identifier of the target cell on a network side.

Based on the foregoing method, different cell identities may be used on the air interface and the network side, so that real identity information of the cell is not exposed on the air interface, and a communication system is more secure. In addition, considering that the first identifier of the target cell is determined by the source CU, and is unknown to the target CU, according to the foregoing method, the target CU may learn of the correspondence between the first identifier of the target cell and the second identifier of the target cell. In this way, when communicating with the terminal, the source CU and the target CU may use a same first identifier of a candidate cell, so that repeated configuration for the terminal device can be avoided.

With reference to the first aspect or any implementation of the first aspect, in another possible implementation, a length of the first identifier is less than a length of the second identifier. In this way, signaling overheads of the air interface can be reduced.

With reference to the first aspect or any implementation of the first aspect, in another possible implementation, the method further includes: The source CU receives a first response message from the core network device. The first response message indicates a path switch success.

With reference to the first aspect or any implementation of the first aspect, in another possible implementation, the method further includes: The source CU receives a fifth notification message from the target CU. The fifth notification message indicates that the terminal device has successfully accessed the target cell.

According to a second aspect, a handover method is provided. The method may be performed by a target CU, or may be performed by a module or unit (for example, a chip or a circuit) in the target CU. The following uses the target CU for description.

For terms or features that are in the second aspect or implementations of the second aspect and that are the same as those in the first aspect or the implementations of the first aspect, refer to the first aspect or the implementations of the first aspect. For technical effects of the second aspect or the implementations of the second aspect, refer to the technical effects in the first aspect or the implementations of the first aspect.

The method includes: The target CU receives a second request message from a source CU. The second request message is used to request first information, and the first information indicates channel information of a user plane bearer of the target CU. The target CU sends a second response message to the source CU. The second response message includes a second identifier of a target cell and the first information, and the target cell is a cell of a target distributed unit DU of the target CU.

With reference to the second aspect, in a possible implementation, the second request message further includes second information, and the second information is used to request to initiate path switch by the source CU; and the second response message further includes third information, and the third information indicates that the source CU is allowed to initiate path switch.

With reference to the second aspect or any implementation of the second aspect, in another possible implementation, the second request message further includes fourth information, and the fourth information indicates that the source CU is to initiate path switch.

With reference to the second aspect or any implementation of the second aspect, in another possible implementation, the method further includes: The target CU receives at least one association relationship from the source CU. The at least one association relationship includes a first association relationship, and the first association relationship indicates an association relationship between a first identifier of the target cell and the first information.

With reference to the second aspect or any implementation of the second aspect, in another possible implementation, the method further includes: The target CU receives service data of a terminal device from the source CU. The target CU sends the service data to the target DU. The target CU receives a fourth notification message from the target DU after sending the service data to the target DU. The fourth notification message indicates that the terminal device has successfully accessed the target cell.

Based on the foregoing method, after the terminal device successfully accesses the target cell of the target DU of the target CU, the target DU can immediately send the data to the terminal device, so that the data is sent to the terminal device as early as possible, and the data is not invalid.

With reference to the second aspect or any implementation of the second aspect, in another possible implementation, the method further includes: The target CU sends a fifth notification message to the source CU. The fifth notification message indicates that the terminal device has successfully accessed the target cell.

With reference to the second aspect or any implementation of the second aspect, in another possible implementation, the method further includes: The target CU receives a second notification message from the source CU. The second notification message indicates the target cell to which the terminal device is to be handed over.

With reference to the second aspect or any implementation of the second aspect, in another possible implementation, the second notification message includes at least one of the following information: the first identifier of the target cell, beam information, or access information. The beam information indicates a beam direction in which the target cell communicates with the terminal device, and the access information indicates an access manner in which the terminal device accesses the target cell.

With reference to the second aspect or any implementation of the second aspect, in another possible implementation, the method further includes: The target CU sends a sixth notification message to the target DU based on the second notification message. The sixth notification message includes at least one of the following information: the first identifier of the target cell, the beam information, or the access information.

With reference to the second aspect or any implementation of the second aspect, in another possible implementation, the second notification message includes seventh information, and the seventh information indicates that the source CU has initiated path switch. The method further includes: The target CU skips path switch based on the seventh information.

With reference to the second aspect or any implementation of the second aspect, in another possible implementation, the method further includes: The target CU receives a correspondence between the first identifier of the target cell and a second identifier of the target cell from the source CU. The first identifier is an identifier of the target cell on an air interface, and the second identifier is an identifier of the target cell on a network side.

According to a third aspect, a handover method is provided. The method may be performed by a target CU, or may be performed by a module or unit (for example, a chip or a circuit) in the target CU. The following uses the target CU for description.

The method includes: The target CU receives a first notification message from a source CU. The first notification message indicates a target cell to which a terminal device is to be handed over, and the target cell is a cell of a target DU of a target CU. The target CU sends a first request message to a core network device based on the first notification message. The first request message is used to request to switch a user plane bearer of the terminal device to the target CU.

Based on the foregoing method, the target CU may initiate switching of the user plane bearer of the terminal device based on the first notification message indicating the target cell to which the terminal device is to be handed over. In other words, the switching of the user plane bearer of the terminal device may be triggered by the first notification message. The switching of the user plane bearer of the terminal device in the foregoing method can be performed earlier than switching of the user plane bearer of the terminal device initiated after an indication indicating that the terminal device successfully accesses the target cell is received. After the switching of the user plane bearer of the terminal device is performed, service data of the terminal device can be directly sent to the target CU without a data forwarding process from the source CU to the target CU. Therefore, according to the foregoing method, data forwarded by the source CU to the target CU can be reduced, thereby reducing invalid data and improving service experience.

With reference to the third aspect, in a possible implementation, the first notification message includes fifth information, and the fifth information indicates that the source CU does not initiate path switch.

With reference to the third aspect or any implementation of the third aspect, in another possible implementation, before receiving the first notification message from the source CU, the method further includes: The target CU receives a second request message from the source CU. The second request message is used to request first information, the first information indicates channel information of a user plane bearer of the target CU, the second request message further includes second information, and the second information is used to request to initiate path switch by the source CU. The target CU sends a second response message to the source CU. The second response message includes sixth information, and the sixth information indicates that the source CU is not allowed to initiate path switch.

Based on the foregoing method, the source CU may determine, through negotiation with the target CU, that the source CU is to initiate switching of the user plane bearer of the terminal device, so that a more appropriate CU initiates switching of the user plane bearer of the terminal device.

With reference to the third aspect or any implementation of the third aspect, in another possible implementation, the first information includes at least one of the following information: an IP address of a downlink termination point of the user plane bearer corresponding to the target CU, or a GTP-TEID of the downlink termination point of the user plane bearer corresponding to the target CU.

With reference to the third aspect or any implementation of the third aspect, in another possible implementation, the first notification message includes at least one of the following information: a first identifier of the target cell, beam information, or access information. The beam information indicates a beam direction in which the target cell communicates with the terminal device, and the access information indicates an access manner in which the terminal device accesses the target cell.

With reference to the third aspect or any implementation of the third aspect, in another possible implementation, the method further includes: The target CU sends a third notification message to the target DU based on the first notification message. The third notification message includes at least one of the following information: the first identifier, the beam information, or the access information.

With reference to the third aspect or any implementation of the third aspect, in another possible implementation, the method further includes: The target CU receives at least one association relationship from the source CU. The association relationship indicates an association relationship between an identifier of a candidate cell and channel information of a user plane bearer of a candidate CU corresponding to the candidate cell.

Based on this, when serving as a source CU in subsequent handover, the target CU may not need to reobtain an association relationship between a candidate cell and channel information of a user plane bearer of a corresponding candidate CU, so that signaling overheads can be reduced, and a subsequent handover process and a corresponding path switch process can be quickly performed.

With reference to the third aspect or any implementation of the third aspect, in another possible implementation, the method further includes: The target CU receives service data of the terminal device from the source CU. The target CU sends the service data to the target DU. The target CU receives a fourth notification message from the target DU after sending the service data to the target DU. The fourth notification message indicates that the terminal device has successfully accessed the target cell.

Based on the foregoing method, after the terminal device successfully accesses the target cell of the target DU of the target CU, the target DU can immediately send the data to the terminal device, so that the data is sent to the terminal device as early as possible, and the data is not invalid.

With reference to the third aspect or any implementation of the third aspect, in another possible implementation, the method further includes: The target CU receives a correspondence between the first identifier of the target cell and a second identifier of the target cell from the source CU. The first identifier is an identifier of the target cell on an air interface, and the second identifier is an identifier of the target cell on a network side.

Based on the foregoing method, different cell identities may be used on the air interface and the network side, so that real identity information of the cell is not exposed on the air interface, and a communication system is more secure. In addition, considering that the first identifier of the target cell is determined by the source CU, and is unknown to the target CU, according to the foregoing method, the target CU may learn of the correspondence between the first identifier of the target cell and the second identifier of the target cell. In this way, when communicating with the terminal, the source CU and the target CU may use a same first identifier of a candidate cell, so that repeated configuration for the terminal device can be avoided.

With reference to the third aspect or any implementation of the third aspect, in another possible implementation, a length of the first identifier is less than a length of the second identifier. In this way, signaling overheads of the air interface can be reduced.

With reference to the third aspect or any implementation of the third aspect, in another possible implementation, the method further includes: The target CU receives a first response message from the core network device. The first response message indicates a path switch success.

According to a fourth aspect, a handover method is provided. The method may be performed by a source CU, or may be performed by a module or unit (for example, a chip or a circuit) in the source CU. The following uses the source CU for description.

For terms or features that are in the fourth aspect or implementations of the fourth aspect and that are the same as those in the third aspect or the implementations of the third aspect, refer to the third aspect or the implementations of the third aspect. For technical effects of the fourth aspect or the implementations of the fourth aspect, refer to the technical effects in the third aspect or the implementations of the third aspect.

The method includes: The source CU receives an eighth notification message from a source DU. The eighth notification message indicates a target cell to which a terminal device is to be handed over, and the target cell is a cell of a target DU of a target CU. The source CU sends a first notification message to the target CU based on the eighth notification message. The first notification message indicates the target cell to which the terminal device is to be handed over.

With reference to the fourth aspect, in a possible implementation, the first notification message includes fifth information, and the fifth information indicates that the source CU does not initiate path switch.

With reference to the fourth aspect or any implementation of the fourth aspect, in another possible implementation, before the source CU sends the first notification message to the target CU based on the eighth notification message, the method further includes: The source CU sends a second request message to the target CU. The second request message is used to request first information, the first information indicates channel information of a user plane bearer of the target CU, the second request message further includes second information, and the second information is used to request to initiate path switch by the source CU. The source CU receives a second response message from the target CU. The second response message includes sixth information, and the sixth information indicates that the source CU is not allowed to initiate path switch.

With reference to the fourth aspect or any implementation of the fourth aspect, in another possible implementation, the first notification message further includes at least one of the following information: a first identifier of the target cell, beam information, or access information. The beam information indicates a beam direction in which the target cell communicates with the terminal, and the access information indicates an access manner in which the terminal device accesses the target cell.

With reference to the fourth aspect or any implementation of the fourth aspect, in another possible implementation, the method further includes: The source CU sends at least one association relationship to a candidate CU. The candidate CU includes the target CU, and the association relationship indicates an association relationship between an identifier of a candidate cell and channel information of a user plane bearer of a candidate CU corresponding to the candidate cell.

With reference to the fourth aspect or any implementation of the fourth aspect, in another possible implementation, the method further includes: The source CU forwards service data of the terminal device to the target CU based on the eighth notification message.

With reference to the fourth aspect or any implementation of the fourth aspect, in another possible implementation, the method further includes: The source CU sends a correspondence between the first identifier of the target cell and a second identifier of the target cell to the target CU. The first identifier is an identifier of the target cell on an air interface, and the second identifier is an identifier of the target cell on a network side.

According to a fifth aspect, a handover method is provided. The method may be performed by a target access network device, or may be performed by a module or unit (for example, a chip or a circuit) in the target access network device. The following uses the target access network device for description.

The method includes: The target access network device determines configuration information of a target cell. The configuration information of the target cell includes configuration information of a first carrier, and the first carrier is a normal uplink (normal uplink, NUL) carrier or a supplementary uplink (supplementary uplink, SUL) carrier. The target access network device sends the configuration information of the target cell to a terminal device.

In a possible implementation, the target access network device sends the configuration information of the target cell to the terminal device via a source access network device.

Based on the foregoing method, when the target cell has two carriers: the NUL carrier and the SUL carrier, the target access network device may determine whether to use the NUL carrier or the SUL carrier to complete a process of handover to the target cell, and provide configuration information of a corresponding carrier to the terminal device, so that the terminal device hands over to the target cell by using the configuration information of the carrier. This helps to ensure successful cell handover.

According to a sixth aspect, a handover method is provided. The method may be performed by a terminal device, or may be performed by a module or unit (for example, a chip or a circuit) in the terminal device. The following uses the terminal device for description.

The method includes: The terminal device receives configuration information of a target cell from a target access network device. The configuration information of the target cell includes configuration information of a first carrier, and the first carrier is an NUL carrier or an SUL carrier. The terminal device receives a handover command from a source access network device. The handover command indicates to hand over to the target cell. The terminal device performs a process of handover to the target cell based on the configuration information of the target cell by using the first carrier.

Based on the foregoing method, when the target cell has two carriers: the NUL carrier and the SUL carrier, the target access network device may determine whether to use the NUL carrier or the SUL carrier to complete the process of handover to the target cell, and provide configuration information of a corresponding carrier to the terminal device, so that the terminal device can hand over to the target cell by using the configuration information of the carrier. This helps to ensure successful cell handover.

According to a seventh aspect, a handover method is provided. The method may be performed by a target access network device, or may be performed by a module or unit (for example, a chip or a circuit) in the target access network device. The following uses the target access network device for description.

The method includes: The target access network device determines configuration information of a target cell. The configuration information of the target cell includes configuration information of an NUL carrier, configuration information of an SUL carrier, and carrier information, and the carrier information indicates to use the NUL carrier to complete a process of handover to the target cell, or the carrier information indicates to use the SUL carrier to complete the process of handover to the target cell. The target access network device sends the configuration information of the target cell to a terminal device.

Based on the foregoing method, when the target cell has two carriers: the NUL carrier and the SUL carrier, the target access network device may determine whether to use the NUL carrier or the SUL carrier to complete the process of handover to the target cell, and provide an indication to the terminal device. This helps to ensure successful cell handover.

According to an eighth aspect, a handover method is provided. The method may be performed by a terminal device, or may be performed by a module or unit (for example, a chip or a circuit) in the terminal device. The following uses the terminal device for description.

The method includes: The terminal device receives configuration information of a target cell from a target access network device. The configuration information of the target cell includes configuration information of an NUL carrier, configuration information of an SUL carrier, and carrier information, the carrier information indicates to use a first carrier to complete a process of handover to the target cell, and the first carrier is the NUL carrier or the SUL carrier. The terminal device receives a handover command from a source access network device. The handover command indicates to hand over to the target cell. The terminal device performs the process of handover to the target cell based on the carrier information by using the first carrier.

Based on the foregoing method, when the target cell has two carriers: the NUL carrier and the SUL carrier, the target access network device may determine whether to use the NUL carrier or the SUL carrier to complete the process of handover to the target cell, and provide an indication to the terminal device. This helps to ensure successful cell handover.

According to a ninth aspect, a handover method is provided. The method may be performed by a target access network device, or may be performed by a module or unit (for example, a chip or a circuit) in the target access network device. The following uses the target access network device for description.

The method includes: The target access network device sends configuration information of a target cell to a terminal device. The configuration information of the target cell includes configuration information of an NUL carrier and configuration information of an SUL carrier. The target access network device sends a first message to a source access network device. The first message is used to notify that the configuration information of the NUL carrier and the configuration information of the SUL carrier are provided to the terminal device.

Based on the foregoing method, when the target cell has two carriers: the NUL carrier and the SUL carrier, the target access network device may provide the configuration information of the NUL carrier of the target cell and the configuration information of the SUL carrier of the target cell to the terminal device, and notify the source access network device that the configuration information of the NUL carrier of the target cell and the configuration information of the SUL carrier of the target cell are provided to the terminal device, so that the source access network device determines whether to use the NUL carrier or the SUL carrier to complete a process of handover to the target cell. This helps to ensure successful cell handover.

According to a tenth aspect, a handover method is provided. The method may be performed by a source access network device, or may be performed by a module or unit (for example, a chip or a circuit) in the source access network device. The following uses the source access network device for description.

The method includes: The source access network device receives a first message from a target access network device. The first message is used to notify that configuration information of an NUL carrier of a target cell and configuration information of an SUL carrier of the target cell are provided to a terminal device. The source access network device determines to use a first carrier to complete a process of handover to the target cell. The source access network device sends a handover command to the terminal device. The handover command indicates to hand over to the target cell, the handover command includes carrier information, the carrier information indicates to use the first carrier to complete the process of handover to the target cell, and the first carrier is the NUL carrier or the SUL carrier.

Based on the foregoing method, when the target cell has two carriers: the NUL carrier and the SUL carrier, the source access network device may determine whether to use the NUL carrier or the SUL carrier to complete the process of handover to the target cell, and provide an indication to the terminal device by using the handover command. This helps to ensure successful cell handover.

According to an eleventh aspect, a handover method is provided. The method may be performed by a target access network device, or may be performed by a module or unit (for example, a chip or a circuit) in the target access network device. The following uses the target access network device for description.

The method includes: The target access network device sends configuration information of a target cell to a terminal device. The configuration information of the target cell includes configuration information of an NUL carrier and configuration information of an SUL carrier. The target access network device sends carrier information to a source access network device. The carrier information indicates to use a first carrier to complete a process of handover to the target cell, and the first carrier is the NUL carrier or the SUL carrier.

Based on the foregoing method, when the target cell has two carriers: the NUL carrier and the SUL carrier, the target access network device may provide the configuration information of the NUL carrier of the target cell and the configuration information of the SUL carrier of the target cell to the terminal device, and notify the source access network device of whether to use the NUL carrier or the SUL carrier to complete the process of handover to the target cell. This helps to ensure successful cell handover.

According to a twelfth aspect, a handover method is provided. The method may be performed by a source access network device, or may be performed by a module or unit (for example, a chip or a circuit) in the source access network device. The following uses the source access network device for description.

The method includes: The source access network device receives carrier information from a target access network device. The carrier information indicates to use a first carrier to complete a process of handover to a target cell, and the first carrier is an NUL carrier of the target cell or an SUL carrier of the target cell. The source access network device sends a handover command to the terminal device. The handover command indicates to hand over to the target cell, and the handover command includes the carrier information.

Based on the foregoing method, when the target cell has two carriers: the NUL carrier and the SUL carrier, the target access network device may provide the configuration information of the NUL carrier of the target cell and the configuration information of the SUL carrier of the target cell to the terminal device, and notify the source access network device of whether to use the NUL carrier or the SUL carrier to complete the process of handover to the target cell, and the source access network device may indicate, to the terminal device by using the handover command, whether to use the NUL carrier or the SUL carrier to complete the process of handover to the target cell. This helps to ensure successful cell handover.

According to a thirteenth aspect, a handover method is provided. The method may be performed by a terminal device, or may be performed by a module or unit (for example, a chip or a circuit) in the terminal device. The following uses the terminal device for description.

The method includes: The terminal device receives configuration information of a target cell from a target access network device. The configuration information of the target cell includes configuration information of an NUL carrier and configuration information of an SUL carrier. The terminal device receives a handover command from a source access network device. The handover command indicates to hand over to the target cell, the handover command includes carrier information, the carrier information indicates to use a first carrier to complete a process of handover to the target cell, and the first carrier is the NUL carrier or the SUL carrier. The terminal device performs the process of handover to the target cell based on the carrier information by using the first carrier.

Based on the foregoing method, when the target cell has two carriers: the NUL carrier and the SUL carrier, the source access network device may indicate, by using the handover command, whether to use the NUL carrier or the SUL carrier to complete the process of handover to the target cell. This helps to ensure successful cell handover.

According to a fourteenth aspect, a handover method is provided. The method may be performed by a terminal device, or may be performed by a module or unit (for example, a chip or a circuit) in the terminal device. The following uses the terminal device for description.

The method includes: The terminal device receives configuration information of a target cell from a target access network device. The configuration information of the target cell includes configuration information of an NUL carrier and configuration information of an SUL carrier. The terminal device receives a handover command from a source access network device. The handover command indicates to hand over to the target cell. The terminal device determines, based on channel quality of the target cell, to use a first carrier to complete a process of handover to the target cell. The first carrier is the NUL carrier or the SUL carrier. The terminal device performs the process of handover to the target cell by using the first carrier.

Based on the foregoing method, when the target cell has two carriers: the NUL carrier and the SUL carrier, the terminal device may determine whether to use the NUL carrier or the SUL carrier to complete the process of handover to the target cell. This helps to ensure successful cell handover.

With reference to the fourteenth aspect, in a possible implementation, that the terminal device determines, based on the channel quality of the target cell, to use the first carrier to complete the process of handover to the target cell includes: The terminal device determines, based on the channel quality of the target cell and a preset threshold, to use the first carrier to complete the process of handover to the target cell.

In a possible implementation, when the channel quality of the target cell is less than the preset threshold, the terminal device determines to use the SUL carrier of the target cell to perform the process of handover to the target cell; otherwise, the terminal device determines to use the NUL carrier of the target cell to perform the process of handover to the target cell.

For example, when reference signal received power of a downlink reference signal of the target cell is less than a preset power threshold, the terminal device determines to use the SUL carrier of the target cell to perform the process of handover to the target cell; otherwise, the terminal device determines to use the NUL carrier of the target cell to perform the process of handover to the target cell.

According to a fifteenth aspect, a communication apparatus is provided. The apparatus is configured to perform the method provided in any one of the foregoing aspects or the implementations of the foregoing aspects. Specifically, the apparatus may include a unit and/or a module configured to perform the method provided in any one of the foregoing aspects or the implementations of the foregoing aspects, for example, a processing unit and/or a communication unit.

In an implementation, the apparatus is a source CU, a target CU, a source access network device, a target access network device, or a terminal device. When the apparatus is a source CU, a target CU, a source access network device, a target access network device, or a terminal device, the communication unit may be a transceiver, an input/output interface, or a communication interface, and the processing unit may be at least one processor. Optionally, the transceiver is a transceiver circuit. Optionally, the input/output interface is an input/output circuit.

In another implementation, the apparatus is a chip, a chip system, or a circuit used in a source CU, a target CU, a source access network device, a target access network device, or a terminal device. When the apparatus is a chip, a chip system, or a circuit used in a source CU, a target CU, a source access network device, a target access network device, or a terminal device, the communication unit may be an input/output interface, an interface circuit, an output circuit, an input circuit, a pin, a related circuit, or the like on the chip, the chip system, or the circuit, and the processing unit may be at least one processor, a processing circuit, a logic circuit, or the like.

According to a sixteenth aspect, a communication apparatus is provided. The apparatus includes: a memory, configured to store a program; and at least one processor, configured to execute a computer program or instructions stored in the memory, to perform the method provided in any one of the foregoing aspects or the implementations of the foregoing aspects.

In an implementation, the apparatus is a source CU, a target CU, a source access network device, a target access network device, or a terminal device.

In another implementation, the apparatus is a chip, a chip system, or a circuit used in a source CU, a target CU, a source access network device, a target access network device, or a terminal device.

According to a seventeenth aspect, a communication apparatus is provided. The apparatus includes at least one processor and a communication interface. The at least one processor is configured to obtain, by using the communication interface, a computer program or instructions stored in a memory, to perform the method provided in any one of the foregoing aspects or the implementations of the foregoing aspects. The communication interface may be implemented by hardware or software.

In an implementation, the apparatus further includes the memory.

According to an eighteenth aspect, a processor is provided, configured to perform the methods provided in the foregoing aspects.

Unless otherwise specified, or if operations such as sending and obtaining/receiving related to the processor do not conflict with actual functions or internal logic of the operations in related descriptions, the operations may be understood as operations such as outputting, receiving, and inputting of the processor, or may be understood as sending and receiving operations performed by a radio frequency circuit and an antenna. This is not limited in this application.

According to a nineteenth aspect, a computer-readable storage medium is provided. The computer-readable medium stores program code for execution by a device, and the program code includes instructions for performing the method provided in any one of the foregoing aspects or the implementations of the foregoing aspects.

According to a twentieth aspect, a computer program product including instructions is provided. When the computer program product runs on a computer, the computer is enabled to perform the method provided in any one of the foregoing aspects or the implementations of the foregoing aspects.

According to a twenty-first aspect, a chip is provided. The chip includes a processor and a communication interface. The processor reads, by using the communication interface, instructions stored in a memory, to perform the method provided in any one of the foregoing aspects or the implementations of the foregoing aspects. The communication interface may be implemented by hardware or software.

Optionally, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or the implementations of the foregoing aspects.

When the method provided in this application is performed by a chip, a quantity of chips that specifically implement the method in this application is not limited in this application. For example, the method may be performed by one chip, or may be performed by two or more chips. In addition, when there are two or more chips that implement the method of this application, a chip vendor is not limited. The chips may be from a same vendor or different vendors.

According to a twenty-second aspect, a communication system is provided, including at least one of the foregoing source CU, target CU, source access network device, target access network device, or terminal device.

According to a twenty-third aspect, a computer program is provided. When the computer program is run on a computer, the method provided in any one of the foregoing aspects or the implementations of the foregoing aspects is performed.

### BRIEF DESCRIPTION OF DRAWINGS

FIG. 1 is a diagram of a network architecture suitable for an embodiment of this application;
FIG. 2 is a diagram of a CU-DU architecture;
FIG. 3 is a schematic flowchart of L1/L2 triggered mobility (L1/L2 Triggered Mobility, LTM) handover between different DUs of a same CU;
FIG. 4 is a schematic flowchart of inter-base station cell handover;
FIG. 5 is a schematic flowchart of a handover method 500 according to this application;
FIG. 6 is a schematic flowchart of a handover method 600 according to this application;
FIG. 7 is a schematic flowchart of a handover method 700 according to this application;
FIG. 8 is a schematic flowchart of a handover method 800 according to this application;
FIG. 9 is a schematic flowchart of a handover method 900 according to this application;
FIG. 10 is a schematic flowchart of a handover method 1000 according to this application;
FIG. 11 is a diagram of a structure of a communication apparatus according to this application; and
FIG. 12 is a diagram of another structure of a communication apparatus according to this application.

### DESCRIPTION OF EMBODIMENTS

For ease of understanding embodiments of this application, before embodiments of this application are described, the following several points are described first.

"Indicating" or "indicate" may include direct indicating and indirect indicating, or in other words, "indicating" or "indicate" may be explicitly and/or implicitly indicating. First, second, and various numbers are merely used for differentiation for ease of description, for example, distinguishing between different messages or different information, and are not used to limit the scope of embodiments of this application. "Predefinition" may be implemented by prestoring corresponding code or a corresponding table in a device, or may be implemented in another manner in which related information may be indicated. A specific implementation of the "predefinition" is not limited in this application. A related "protocol" may be a standard protocol in the communication field, for example, may include a long term evolution (long term evolution, LTE) protocol, a new radio (new radio, NR) protocol, and a related protocol applied to a future communication system. This is not limited in this application. Words such as "exemplary", "for example", "example", and "in an/another example" are used to represent giving an example, an illustration, or a description. Any embodiment or design scheme described as an "example" in this application should not be interpreted as being preferred or superior to another embodiment or design scheme. Terms such as "include", and "have" and their variants all mean "including but not limited to", unless otherwise specifically emphasized. "At least one" means one or more, and "a plurality of" means two or more. "And/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form. Related descriptions about that a network element A sends a message, information, or data to a network element B, and the network element B receives the message, information, or data from the network element A are intended to clarify the network element to which the message, information, or data is sent. Whether the message, information, or data is directly sent or is indirectly sent via another network element is not limited. Descriptions such as "when...", "in a case of...", "in response to", and "if" all mean that a device performs corresponding processing in a specific objective situation, where time is not limited, the device is not necessarily required to perform a determining action during implementation, and there are no other limitations.

In addition, a network architecture and a service scenario described in embodiments of this application are intended to describe technical solutions in embodiments of this application more clearly, and do not constitute any limitation on the technical solutions provided in embodiments of this application. A person of ordinary skill in the art may be aware that, with evolution of the network architecture and emergence of new service scenarios, the technical solutions provided in embodiments of this application are also applicable to similar technical problems.

The following describes communication systems to which embodiments of this application may be applied.

Embodiments of this application may be applied to various communication systems, for example, an LTE system, a frequency division duplex (frequency division duplex, FDD) system, a time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or an NR system, a 6th generation (6th generation, 6G) system, or a future communication system. The 5G mobile communication system in this application includes a non-standalone (non-standalone, NSA) 5G mobile communication system or a standalone (standalone, SA) 5G mobile communication system. The communication systems may alternatively be a public land mobile network (public land mobile network, PLMN), a device-to-device (device-to-device, D2D) communication system, a machine to machine (machine to machine, M2M) communication system, an internet of things (internet of Things, IoT) communication system, a vehicle to everything (vehicle to everything, V2X) communication system, an uncrewed aerial vehicle (uncrewed aerial vehicle, UAV) communication system, or other communication systems.

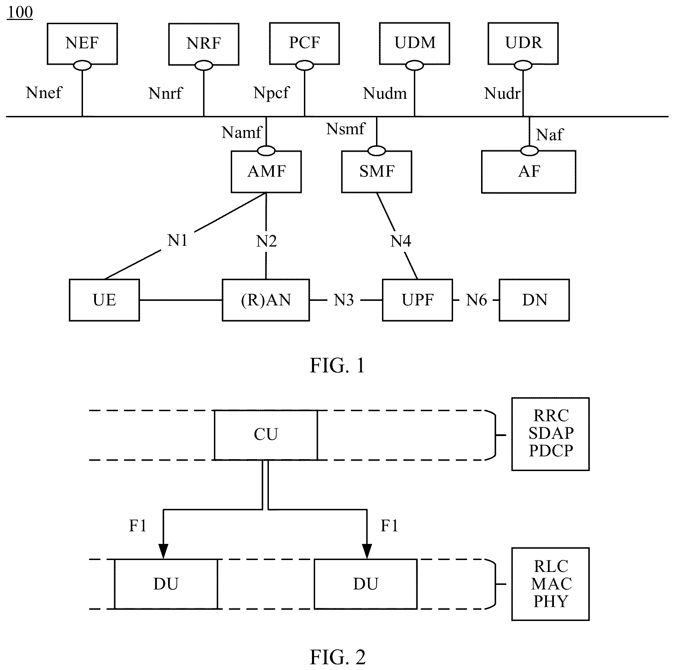

For example, FIG. 1 is a diagram of a network architecture suitable for an embodiment of this application. As shown in FIG. 1, the network architecture may specifically include three parts: a terminal device part, a data network (data network, DN) part, and an operator network part. The following briefly describes functions of network elements in the parts.

The terminal device part may include a terminal device. The terminal device, which may also be referred to as user equipment (user equipment, UE), an access terminal, a terminal, a subscriber unit, a subscriber station, a mobile station, a remote station, a remote terminal, a mobile device, a user terminal, a user agent, a user apparatus, or the like, is a device having a wireless transceiver function, and may communicate with one or more core network (core network, CN) devices via an access network device (or may be referred to as an access device) in a radio access network (radio access network, RAN). The terminal device may be deployed on land, including an indoor device, an outdoor device, a handheld device, or a vehicle-mounted device; may be deployed on a water surface (for example, on a ship); or may be deployed in air (for example, on an airplane, a balloon, or a satellite). The terminal device may be a cellular phone (cellular phone), a cordless phone, a session initiation protocol (session initiation protocol, SIP) phone, a smartphone (smartphone), a mobile phone (mobile phone), a wireless local loop (wireless local loop, WLL) station, a personal digital assistant (personal digital assistant, PDA), or the like. Alternatively, the terminal device may be a handheld device having a wireless communication function, a computing device or another device connected to a wireless modem, a vehicle-mounted device, a wearable device, an uncrewed aerial vehicle device, a terminal in the internet of things or internet of vehicles, a terminal in any form in a 5G network or a future network, relay user equipment, a terminal in a future evolved 6G network, or the like. Alternatively, the terminal device may be a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. A specific technology and a specific device form that are used for the terminal device are not limited in embodiments of this application.

The data network, which may also be referred to as a packet data network (packet data network, PDN), is usually a network located outside an operator network, for example, a third-party network. Certainly, in some implementations, the DN may alternatively be deployed by an operator, that is, the DN is a part of a PLMN. An operator network may access a plurality of data networks DNs, and a plurality of services may be deployed on the data networks DNs, to provide data and/or voice services for the terminal device. The terminal device may further access the data network DN via the operator network, to use an operator service deployed on the data network DN and/or a service provided by a third party.

The operator network part may include but is not limited to a (radio) access network ((radio) access network, (R)AN) and a core network (core network, CN) part.

The (R)AN, which may be considered as a sub-network of the operator network, is an implementation system between a service node in the operator network and the terminal device. To access the operator network, the terminal device first needs to be connected to the (R)AN, and then may be connected to the service node of the operator network via the (R)AN. The access network device (RAN device) in embodiments of this application is a device that provides a wireless communication function for the terminal device. A specific technology and a specific device form that are used for the access network device are not limited in embodiments of this application.

In a possible scenario, the access network device may be a base station (base station), an evolved NodeB (evolved NodeB, eNodeB), an access point (access point, AP), a transmission reception point (transmission reception point, TRP), a next-generation NodeB (next-generation NodeB, gNB), a next-generation base station in a 6th generation (6th generation, 6G) mobile communication system, an access node in a wireless fidelity (wireless fidelity, Wi-Fi) system, an access node in a base station in a future mobile communication system, or the like. The access network device may be a macro base station, a micro base station, an indoor base station, a relay node, a donor node, or a radio controller in a CRAN scenario. Optionally, the access network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of access network devices coordinate to assist the terminal device in implementing radio access, and different access network devices each implement a part of functions of a base station. For example, the access network device may be a CU, a DU, a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may have different names, but a person skilled in the art may understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A CN part includes but is not limited to the following network functions (Network Function, NF): a user plane function (user plane function, UPF), a network exposure function (network exposure function, NEF), a network repository function (network repository function, NRF), a policy control function (policy control function, PCF), a UDM, a UDR, an access and mobility management function (access and mobility management function, AMF), a session management function (session management function, SMF), and an application function (application function, AF).

The following further briefly describes functionality of the NFs included in the CN.
1. The UPF, which is a gateway for communication between the operator network and the data network DN, mainly provides user plane functionality such as forwarding and processing user packets, connecting to the DN, session anchoring, and quality of service (quality of service, QoS) policy enforcement.
2. The NEF, which is a control plane function, is mainly configured to securely expose, to outside (for example, the AF), services and capabilities provided by 3GPP network functions. The NEF also allows authenticated and authorized application functions to securely provide information in the 3GPP network.
3. The NRF, which is a control plane function, may be configured to maintain real-time information about network functions and services in the network.
4. The PCF, which is a control plane function, supports a unified policy framework to govern network behavior, and provides subscription information and the like related to policy rules and policy decisions to another control function.
5. The UDM, which is a control plane function, is mainly responsible for storing subscription data of subscribers in the operator network.
6. The UDR, which is a control plane function, is mainly responsible for data storage and retrieval, for example, providing functionality such as storage and retrieval of subscription data by the UDM, storage and retrieval of policy data by the PCF, and storage and retrieval of NF group ID (group ID) information of users.
7. The AMF, which is a control plane function, is mainly responsible for access control and mobility management for accessing the operator network by the terminal device, for example, including functionality such as mobility management, allocation of a temporary user identity, and user authentication and authorization.
8. The SMF, which is a control plane function, is mainly responsible for session-related functionality such as session management (for example, session establishment, modify, and release), UPF network function selection and control, service and session continuity (service and session continuity, SSC) mode selection, and roaming.
9. The AF, which is a control plane function, is configured to provide application layer information.

Nnef, Nnrf, Npcf, Nudm, Nudr, Namf, Nsmf, N1, N2, N3, N4, N6, and N9 in FIG. 1 are interface sequence numbers. For example, for meanings of the interface sequence numbers, refer to meanings defined in the 3GPP standard protocol. The meanings of the interface sequence numbers are not limited in this application. It should be noted that the interface names between the network functions in FIG. 1 are merely examples. In specific implementation, the interface names of the system architectures may alternatively be other names. This is not limited in this application. The interfaces between the network elements may be point-to-point interfaces, or may be service-based interfaces. This is not limited in this application.

It should be understood that the network architecture shown above is merely an example for description, and network architectures suitable for embodiments of this application are not limited thereto. Any network architecture that can implement the functions of the network elements is suitable for embodiments of this application.

It should be further understood that functions or network elements such as the AMF, the SMF, the UPF, the PCF, the UDM, the UDR, the NEF, the NRF, and the AF shown in FIG. 1 may be understood as network elements configured to implement different functions, for example, may be combined into a network slice as required. These network elements may be devices independent of each other, or may be integrated into a same device to implement different functions, or may be network elements in a hardware device, or may be software functions running on dedicated hardware, or may be instantiated virtualization functions on a platform (for example, a cloud platform). Specific forms of the network elements are not limited in this application.

It should be further understood that the foregoing names are defined merely for ease of distinguishing between different functions, and should not constitute any limitation on this application. This application does not exclude a possibility of using other names in a 6G network and another future network. For example, in the 6G network, a part or all of the network elements may still use terms in 5G, or may use other names.

For ease of understanding embodiments of this application, the following briefly describes some terms or technologies in embodiments of this application.

### 1. CU-DU split architecture

FIG. 2 is a diagram of a CU-DU architecture.

As shown in FIG. 2, a base station may be logically divided into one CU and one or more DUs. Each DU is connected to the CU by using an F1 logical interface. Operations related to a radio link control (Radio Link Control, RLC) layer, a media access control (Media Access Control, MAC) layer, and a physical layer (Physical Layer, PHY) are processed by the DU. Operations related to a service data adaptation protocol (Service Data Adaptation Protocol, SDAP) layer, a radio resource control (Radio Resource Control, RRC) layer, and a packet data convergence protocol (Packet Data Convergence Protocol, PDCP) layer are processed by the CU.

### 2. LTM

In LTM, L1 refers to the PHY, and L2 refers to the MAC layer, the RLC layer, the PDCP layer, and the SDAP layer.

LTM means that handover-related operations are mainly performed at L1 and/or L2. For example, a terminal device sends an L1 measurement result to a base station by using physical layer control signaling. The physical layer control signaling may be carried on a physical uplink control channel (Physical Uplink Control Channel, PUCCH). A physical layer of the base station reads the L1 measurement result, a handover decision is made based on the L1 measurement result, and then the handover decision is sent to the terminal device by using L1/L2 signaling. The L1/L2 signaling may be a message carried on a physical downlink control channel (Physical Downlink Control Channel, PDCCH), or may be a MAC control element (MAC Control Element, MAC CE).

It should be noted that L1/L2 represents L1 and/or L2. When the relationship is "and", handover-related operations are mainly performed by L1 and L2. When the relationship is "or", handover-related operations are mainly performed by L1 or L2.

### 3. LTM handover between different DUs of a same CU

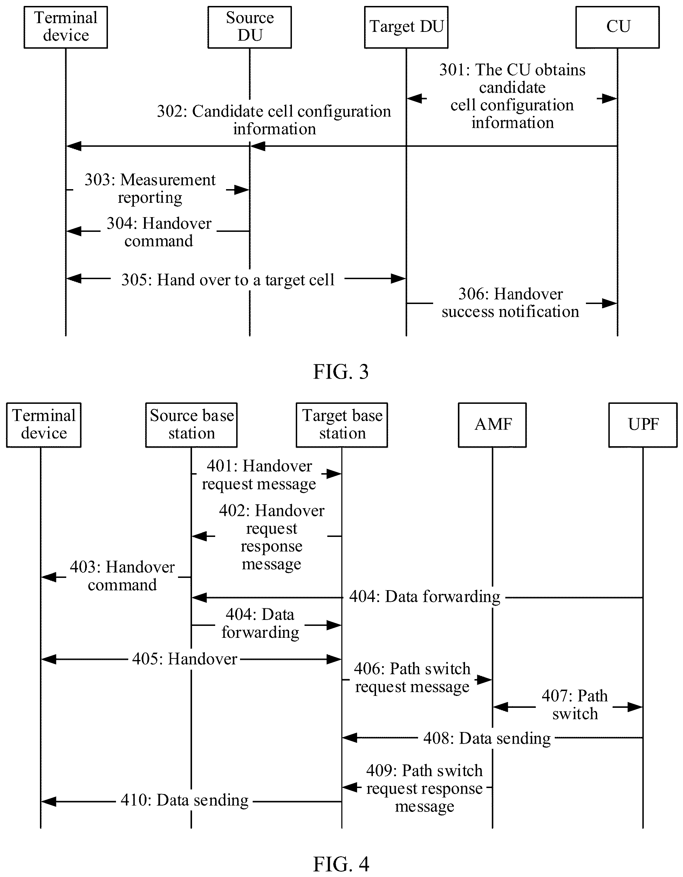

FIG. 3 is a schematic flowchart of LTM handover between different DUs of a same CU. An S-DU is a source DU (source DU), a T-DU is a target DU (target DU), and the source DU and the target DU belong to a same CU. The target DU is one of candidate DUs. Before the handover, there may be a plurality of candidate DUs. During the handover, one of the candidate DUs becomes the target DU. FIG. 3 shows only signaling exchange between the CU and the target DU.

Step 301: The CU obtains candidate cell configuration information from a candidate DU.

There may be one or more candidate cells. There may also be one or more candidate DUs. When there are a plurality of candidate DUs, the CU obtains, from each candidate DU, configuration information of a candidate cell of the DU.

A complete piece of candidate cell configuration information may include a part generated by the CU and a part generated by the DU. The part generated by the CU may be described as "CU side configuration information", and the part generated by the DU may be described as "DU side configuration information". The candidate cell configuration information herein is "DU side configuration information".

Step 302: The CU sends candidate cell configuration information to a terminal device via the source DU.

The candidate cell configuration information herein may be complete candidate cell configuration information, that is, "CU side configuration information" and the "DU side configuration information".

Step 303: The terminal device performs cell measurement, and reports a measurement result to the source DU.

During LTM handover, the terminal device reports an L1 measurement result. The terminal device sends L1 measurement results of different cells to the source DU by using a communication resource of a source cell. The L1 measurement result includes at least one of the following: an L1 measurement result of the source cell or an L1 measurement result of at least one candidate cell.

The L1 measurement result of the source cell and/or the L1 measurement result of the candidate cell may be a cell-level measurement result, or may be a beam-level measurement result.

Step 304: The source DU determines, based on the L1 measurement results reported by the terminal device, to hand over the terminal device to a target cell, and sends a handover command to the terminal device.

The target cell is one of candidate cells. The handover command includes identification information of the target cell. The handover command may be sent to the terminal device by using L1/L2 signaling. The L1/L2 signaling is still sent by using a communication resource of the source cell. The L1/L2 signaling may be a MAC CE.

The source DU may further send, to the CU, the case that cell handover is triggered.

Step 305: The terminal device performs LTM handover to hand over to the target cell.

Specifically, the terminal device accesses the target cell by using configuration information of the target cell received in step 302.

After the terminal device successfully accesses the target cell, the terminal device performs uplink and downlink data transmission with the target cell.

Step 306: After the terminal device successfully accesses the target cell, the target DU sends a handover success notification to the CU, to notify that the terminal device successfully hands over to the target cell.

It can be learned from FIG. 3 that, for LTM handover, a base station preconfigures configuration information of a candidate cell for a terminal device before the handover.

### 4. Data forwarding and path switch in an inter-base station cell handover process

### (1) Data forwarding

Downlink data sent to a terminal device is sent by a UPF of a core network to a base station, and then sent by the base station to the terminal device.

In a mobile communication system, movement of a location of the terminal device may cause a change of a communication link between the terminal device and the base station, and the base station indicates, based on a movement status of the terminal device, the terminal device to perform cell handover.

Before handover, a user plane transmission bearer is established between the UPF and a source base station. Downlink data may be sent to the source base station by using the user plane transmission bearer between the UPF and the source base station, and further sent by the source base station to the terminal device. As the location of the terminal device moves, when cell handover needs to be performed, the source base station sends a handover command to the terminal device. Then, the source base station cannot send downlink data from the UPF to the terminal device. In this case, the source base station may send downlink data buffered in the source base station to a target base station, so that the target base station sends the downlink data to the terminal device after the handover is completed, to ensure that the data is not lost. The process of forwarding the data from the source base station to the target base station is referred to as data forwarding (data forwarding).

The user plane transmission bearer may also be described as a user plane channel, a user plane tunnel, a user plane data channel, a user plane data tunnel, or the like.

### (2) Path switch

After the terminal device successfully hands over to the target base station, the target base station may send, to the terminal device, the data forwarded from the source base station. However, because a user plane transmission bearer between the UPF and the target base station has not been established in this case, the target base station needs to send a path switch (path switch) request message to an AMF of the core network, to request to establish the user plane transmission bearer between the UPF and the target base station. After receiving the path switch request message of the target base station, the AMF may control the UPF to establish the user plane transmission bearer between the UPF and the target base station. Then, the UPF may directly send downlink data to the target base station without data forwarding of the source base station.

The following describes data forwarding and path switch in inter-base station cell handover with reference to FIG. 4.

FIG. 4 is a schematic flowchart of inter-base station cell handover. In FIG. 4, transmission of downlink data is used as an example for description.

Step 401: When a source base station determines that a terminal device needs to be handed over, the source base station sends a handover request message to a target base station.

Step 402: When the target base station allows access of the terminal device, the target base station sends a handover request response message to the source base station.

The handover request response message may include configuration information of a target cell.

Step 403: After receiving the handover request response message, the source base station sends a handover command to the terminal device.

The handover command includes the configuration information of the target cell.

Step 404: After the source base station sends the handover command to the terminal device, the source base station forwards downlink data from a UPF to the target base station.

After the source base station sends the handover command to the terminal device, the source base station cannot send downlink data to the terminal device. The source base station sends downlink data buffered in the source base station to the target base station, so that the target base station sends the downlink data to the terminal device after the terminal device accesses the target cell.

Step 405: The terminal device accesses the target cell according to the received handover command by using the configuration information of the target cell.

Step 406: After the terminal device successfully accesses the target cell, the target base station sends a path switch request message to an AMF.

Step 407: The AMF controls the UPF to perform path switch, to establish a user plane transmission bearer between the UPF and the target base station.

Step 408: After step 407, the UPF may send, to the target base station without data forwarding of the source base station, downlink data to be sent to the terminal device.

Step 409: The AMF sends a path switch request response message to the target base station.

Step 410: The target base station sends data to the terminal device.

The downlink data includes the downlink data forwarded from the source base station and the downlink data directly from the UPF. It should be noted that, for the downlink data forwarded from the source base station, the target base station may send the downlink data to the terminal device after step 405.

For more detailed descriptions of the inter-base station cell handover, refer to a conventional technology. Details are not described herein. The foregoing step 404 shows data forwarding in the inter-base station cell handover process, and the foregoing steps 406 to 409 show path switch in the inter-base station cell handover process.

Currently, sending of a piece of downlink data from the UPF to the terminal device needs to be completed within specific duration, for example, 20 ms. As shown above, in the handover process, some data needs to experience a data forwarding process from the source base station to the target base station. This extra delay may result in that time at which the data (especially data of a delay-sensitive service) arrives at the terminal device exceeds the specific duration. The data that exceeds the specific duration becomes invalid, and is unavailable to the terminal device. Consequently, service experience deteriorates.

For the foregoing problem, this application provides a handover method. A path switch procedure may be performed earlier to reduce data forwarded by a source CU to a target CU, thereby reducing invalid data and improving service experience.

The following describes method embodiments provided in this application.

Embodiments of this application may be applied to LTM handover between different DUs of different CUs, and may also be applied to other similar handover scenarios and handover technologies. This is not limited. It should be noted that numbers of steps in the following method embodiments do not mean execution sequences. Sequences of the steps may be determined by internal logic. The following described sequences of the steps are merely examples, and the sequences of the steps are not limited thereto.

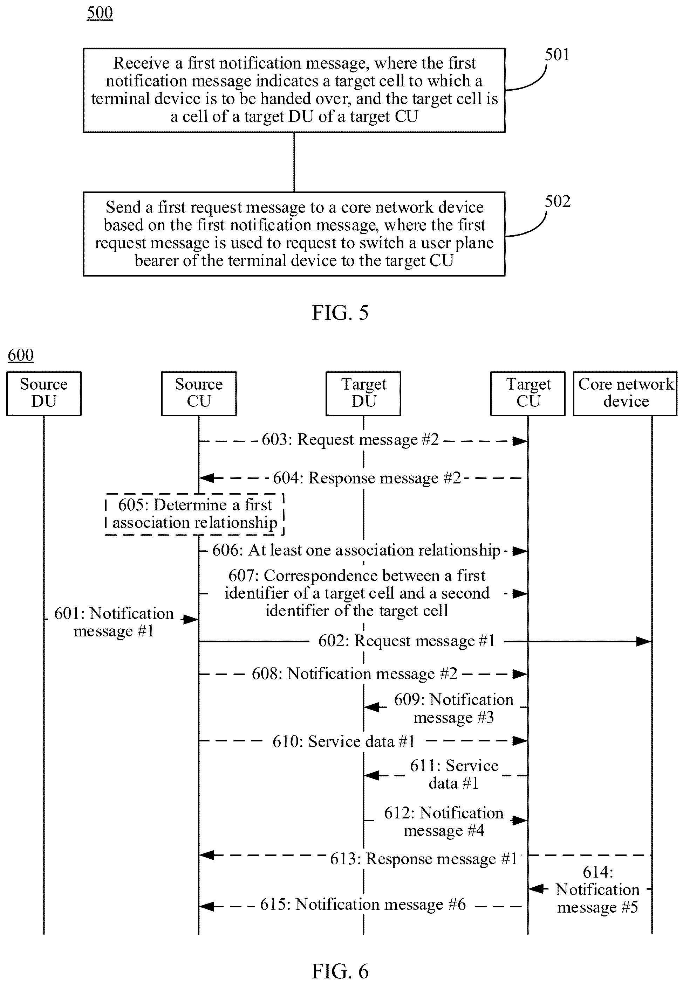

FIG. 5 is a schematic flowchart of a handover method 500 according to this application. The method 500 includes at least a part of the following content.

Step 501: Receive a first notification message.

The first notification message indicates a target cell to which a terminal device is to be handed over. The target cell is a cell of a target DU of a target CU.

Step 502: Send a first request message to a core network device based on the first notification message.

The first request message is used to request to switch a user plane bearer of the terminal device to the target CU. The user plane bearer may also be described as a user plane transmission bearer, a user plane channel, a user plane tunnel, or the like. The user plane bearer of the terminal device may be understood as a bearer, a channel, a tunnel, or the like for transmitting user plane data of the terminal device.

Different from switching of the user plane bearer of the terminal device initiated after an indication indicating that the terminal device successfully accesses the target cell is received, switching of the user plane bearer of the terminal device in the method 500 may be initiated based on the first notification message indicating the target cell to which the terminal device is to be handed over. In other words, the switching of the user plane bearer of the terminal device may be triggered by the first notification message. In this way, the switching of the user plane bearer of the terminal device may be performed earlier. After the switching of the user plane bearer of the terminal device is performed, service data of the terminal device can be directly sent to the target CU without a data forwarding process from the source CU to the target CU. Therefore, based on the method 500, data forwarded by the source CU to the target CU can be reduced, thereby reducing invalid data and improving service experience.

The method 500 may be performed by a source CU or a module or unit in the source CU, or may be performed by a target CU or a module or unit in the target CU. The following uses the source CU or the target CU for description.

The following describes, in detail with reference to FIG. 6, a solution executed by the source CU or the module or unit in the source CU.

FIG. 6 is a schematic flowchart of a handover method 600 according to this application. The method 600 may include at least a part of the following content.

Step 601: A source DU sends a notification message #1 to a source CU, or in other words, the source CU receives the notification message #1 from the source DU.

The notification message #1 may correspond to the first notification message in the method 500, and indicates a target cell to which a terminal device is to be handed over. That the notification message #1 indicates the target cell to which the terminal device is to be handed over may also be described as follows: The notification message #1 indicates that the terminal device is to be handed over to the target cell, or the first notification message is used to notify the source CU of initiation of an LTM command for the terminal device and an identifier of the target cell.

In a possible implementation, the source DU may determine, based on an L1 measurement result reported by the terminal device, to hand over the terminal device to the target cell, and send the notification message #1 to the source CU after determining to hand over the terminal device to the target cell.

Step 602: The source CU sends a request message #1 to a core network device based on the notification message #1.

The request message #1 may correspond to the first request message in the method 500, and is used to request to switch a user plane bearer of the terminal device to a target CU.

For example, the request message #1 may be a path switch request message.

That the request message #1 is used to request to switch the user plane bearer of the terminal device to the target CU may be replaced as follows: The request message #1 is used to request to switch a downlink termination point of the user plane transmission bearer of the terminal device to a downlink termination point of a user plane transmission bearer corresponding to the target cell. The downlink termination point of the user plane transmission bearer corresponding to the target cell may be the target CU to which the target cell belongs.

For example, the core network device may be an AMF. After receiving the request message #1, the AMF may control a UPF to switch the user plane bearer of the terminal device to the target CU.

In this way, in the method 600, the source CU may initiate switching of the user plane bearer of the terminal device based on the notification message #1 indicating the target cell to which the terminal device is to be handed over, so that a process of switching the user plane bearer of the terminal device can be performed earlier, to reduce data forwarded by the source CU to the target CU, thereby reducing invalid data and improving service experience.

A specific implementation of step 602 is not limited in this embodiment of this application.

In a first possible implementation, the notification message #1 includes a first identifier of the target cell, and step 602 may specifically include: The source CU sends the request message #1 to the core network device based on the first identifier of the target cell in the notification message #1 and a first association relationship. The first association relationship indicates an association relationship between the first identifier of the target cell and first information, the first information indicates channel information of a user plane bearer of the target CU, and the request message #1 may include the first information.

For example, the first information may include at least one of the following information: an IP address of a downlink termination point of the user plane bearer of the target CU or a GTP-TEID of the downlink termination point of the user plane bearer of the target CU.

That the first information indicates the channel information of the user plane bearer of the target CU may be replaced as follows: The first information indicates channel information of the user plane bearer corresponding to the target cell. It should be noted that, in this embodiment of this application, each of cells of one CU may correspond to channel information of one user plane bearer, or cells of one candidate CU may correspond to channel information of a same user plane bearer. This is not limited.

A manner of obtaining the first association relationship is not limited in this embodiment of this application.

In a possible implementation, the first association relationship is preconfigured. For example, before step 602, the method 600 may further include steps 603 to 605, which are specifically as follows:
Step 603: The source CU sends a request message #2 to the target CU, or in other words, the target CU receives the request message #2 from the source CU.

The request message #2 is used to request the channel information of the user plane bearer of the target CU, that is, the first information.

In a possible implementation, the request message #2 may be obtained by reusing or enhancing a message used to request candidate cell configuration information. In other words, when requesting the candidate cell configuration information from the target CU, the source CU may also request the channel information of the user plane bearer of the target CU. The request for the channel information of the user plane bearer of the target CU may be implemented explicitly or implicitly. This is not limited. For example, the source CU may add additional information, for example, an identifier of the target CU, to the message used to request the candidate cell configuration information, to indicate that the channel information of the user plane bearer of the target CU is requested. For another example, the source CU may send the message used to request the candidate cell configuration information, and the message may indicate that the channel information of the user plane bearer of the target CU is requested.

Step 604: After receiving the request message #2, the target CU sends, to the source CU, a response message of the request message #2, that is, a response message #2 in FIG. 6. Correspondingly, the source CU receives the response message #2 from the target CU.

The response message #2 includes the first information.

Step 605: The source CU determines the first association relationship based on the first information.

In a possible implementation, the source CU determines the first association relationship based on the target cell, a cell of the target CU, and the first information. For example, when the source CU knows the cell of the target CU, after receiving the first information, the source CU may generate an association relationship between the cell of the target CU and the first information. Because the cell of the target CU includes the target cell, the generated association relationship includes the first association relationship.

In another possible implementation, the response message #2 further includes a second identifier of the target cell. In this case, the source CU may generate the first association relationship based on the second identifier of the target cell and the first information in the response message #2. In this embodiment of this application, the first identifier of the target cell may be an identifier of the target cell on an air interface, and the second identifier of the target cell may be an identifier of the target cell on a network side. The first identifier of the target cell may be the same as or different from the second identifier of the target cell. When the first identifier of the target cell is different from the second identifier of the target cell, real identity information of the candidate cell is not exposed on the air interface, so that a communication system is more secure.

Optionally, a length of the first identifier of the target cell is less than a length of the second identifier of the target cell. In this way, signaling overheads of the air interface can be reduced.

When the first identifier of the target cell is different from the second identifier of the target cell, that the source CU generates the first association relationship based on the second identifier of the target cell and the first information in the response message #2 may specifically include: The source CU converts the second identifier of the target cell included in the response message #2 into the first identifier, and then generates an association relationship between the first identifier and the first information, that is, the first association relationship.

It should be noted that FIG. 6 shows only signaling exchange related to a target DU and the target CU to which the target cell belongs, and determining of the first association relationship. Actually, steps 603 to 605 may include signaling exchange between the source CU and at least one candidate CU including the target CU, and determining of an association relationship between at least one candidate cell including the target cell and channel information of a user plane bearer of a corresponding candidate CU.

In some other embodiments, the method 600 may further include step 606: The source CU sends at least one association relationship to the target CU, or in other words, the target CU receives the at least one association relationship from the source CU. The at least one association relationship is the association relationship generated through steps 603 to 605 between the at least one candidate cell and the channel information of the user plane bearer of the corresponding candidate CU, and the at least one association relationship includes the first association relationship. Based on this, when the target CU serves as a source CU in subsequent handover, steps 603 to 604 may not need to be performed again to obtain an association relationship between a candidate cell and channel information of a user plane bearer of a corresponding candidate CU, so that signaling overheads can be reduced, and a subsequent handover process and a corresponding path switch process can be quickly performed.

FIG. 6 merely shows an example that the source CU sends the at least one association relationship to the target CU. Actually, the source CU may send the at least one association relationship to all candidate CUs.

An occasion for performing step 606 is not limited in this application. For example, as shown in FIG. 6, the source CU may send the at least one association relationship to the candidate cell after determining the at least one association relationship. For another example, the source CU may send the at least one association relationship to the target CU and/or the candidate CU after learning that the terminal device successfully accesses the target cell.

In a second possible implementation, the notification message #1 includes a first identifier of the target cell, and step 602 may specifically include: The source CU sends the request message #1 to the core network device based on the first identifier of the target cell in the notification message #1 and a second association relationship. The second association relationship indicates an association relationship between the target CU and first information, the first information indicates channel information of a user plane bearer of the target CU, and the request message #1 may include the first information.

For example, the source CU determines, based on the first identifier of the target cell in the notification message #1 and a cell of the target CU, the identifier of the target CU to which the target cell belongs, and then sends the request message #1 to the core network device based on the identifier of the target CU and the second association relationship.

A manner of obtaining the second association relationship is not limited in this embodiment of this application.

In a possible implementation, the second association relationship is preconfigured. The manner of obtaining the second association relationship is similar to the manner of obtaining the first association relationship. Refer to steps 603 to 605. A difference lies in that the response message #2 may include the identifier of the target CU and the first information, so that the source CU may generate a correspondence between the identifier of the target CU and the first information.

The method 600 may further include: The source CU sends at least one association relationship to the target CU, or in other words, the target CU receives the at least one association relationship from the source CU, similar to step 606. The association relationship is an association relationship between a candidate CU and channel information of a user plane bearer of the candidate CU, and the at least one association relationship includes the second association relationship. Based on this, when serving as a source CU in subsequent handover, the target CU may not need to reobtain an association relationship between a candidate CU and channel information of a user plane bearer, so that signaling overheads can be reduced, and a subsequent handover process and a corresponding path switch process can be quickly performed. For more detailed descriptions, refer to step 606.

In addition, considering that the first identifier of the target cell is determined by the source CU, and is unknown to the target CU, the method 600 may further include step 607: The source CU sends a correspondence between the first identifier of the target cell and the second identifier of the target cell to the target CU, so that the target CU learns of the correspondence between the first identifier of the target cell and the second identifier of the target cell.

Similarly, FIG. 6 merely shows an example that the source CU sends the correspondence between the first identifier of the target cell and the second identifier of the target cell to the target CU. Actually, the source CU may send a correspondence between a first identifier and a second identifier of each candidate cell to each of the candidate CUs.

In this way, when communicating with the terminal, a plurality of CUs including the source CU and the target CU may use a same first identifier of a candidate cell, so that repeated configuration for the terminal device can be avoided.

An implementation of sending the correspondence between the first identifier of the target cell and the second identifier of the target cell is not limited in this application. In a possible implementation, the correspondence between the first identifier of the target cell and the second identifier of the target cell may be sent to the candidate CU together with the at least one association relationship. In another possible implementation, if the source CU knows a cell of the candidate CU, the source CU may convert an identity of the candidate cell in advance, and the correspondence between the first identifier of the target cell and the second identifier of the target cell is carried in the request message #2 in step 603.

In this embodiment of this application, that the source CU initiates switching of the user plane bearer of the terminal device may be specified in a protocol, or may be determined through negotiation between the source CU and the target CU. The following describes negotiation between the source CU and the target CU.

A specific implementation of negotiation between the source CU and the target CU is not limited in this application.

In a possible implementation, the source CU may include second information in the request message #2 in step 603. The second information is used to request to initiate switching of the user plane bearer of the terminal device, that is, path switch, by the source CU. Correspondingly, the target CU may include third information in the response message #2 in step 604. The third information indicates that the source CU is allowed to initiate switching of the user plane bearer of the terminal device. In this case, the source CU may determine that the source CU is to initiate switching of the user plane bearer of the terminal device.

In another possible implementation, the source CU may include fourth information in the request message #2 in step 603. The fourth information indicates that the source CU is to initiate switching of the user plane bearer of the terminal device. In other words, after determining that the source CU is to initiate switching of the user plane bearer of the terminal device, the source CU notifies the target CU, and does not need to be permitted by the target CU.

In some other embodiments, the method 600 may further include steps 608 and 609, which are specifically as follows:
Step 608: After receiving the notification message #1, the source CU sends a notification message #2 to the target CU, or in other words, the target CU receives the notification message #2 from the source CU.

The notification message #2 indicates the target cell to which the terminal device is to be handed over, or indicates that the terminal device is to be handed over to the target cell.

For example, the notification message #2 may include at least one of the following information: the first identifier of the target cell, beam information, or access information. The beam information indicates a beam direction in which the target cell communicates with the terminal device. The access information indicates an access manner in which the terminal device accesses the target cell, for example, a random access-based access manner or a random access-free access manner.

Step 609: After receiving the notification message #2, the target CU sends a notification message #3 to the target DU, or in other words, the target DU receives the notification message #3 from the target CU.

The notification message #3 indicates the target cell to which the terminal device is to be handed over, or indicates that the terminal device is to be handed over to the target cell.

For example, the notification message #3 may include at least one of the following information: the first identifier of the target cell, the beam information, or the access information, so that the target DU uses the information to perform an access process with the terminal device.

In a possible implementation, the notification message #2 in step 608 may further include seventh information. The seventh information indicates that the source CU has initiated switching of the user plane bearer of the terminal device. For example, when the source CU and the target CU do not negotiate who initiates switching of the user plane bearer of the terminal device, and the source CU has sent the request message #1, the notification message #2 may carry the seventh information, so that based on the seventh information, the target CU does not initiate switching of the user plane bearer of the terminal device.

In some other embodiments, the method 600 may further include steps 610 and 611, which are specifically as follows:
Step 610: The source CU forwards, to the target CU based on the notification message #1, service data #1 of the terminal device buffered in the source CU, so that a target base station sends the service data #1 to the terminal device after the terminal device accesses the target cell.
Step 611: After receiving the service data #1, the target CU sends the service data #1 to the target DU.

In a possible implementation, the target CU may send the service data #1 to the target DU after determining that the terminal device successfully accesses the target cell. For example, the target CU may send the service data #1 to the target DU after receiving a notification message #4 shown in step 612. The notification message #4 indicates that the terminal device successfully accesses the target cell. This can avoid invalid transmission of the service data #1 to the target DU.

In another possible implementation, the target CU may send the service data #1 to the target DU after receiving the notification message #2. In this way, after the terminal device successfully accesses the target cell of the target DU of the target CU, the target DU can immediately send the data to the terminal device, so that the data is sent to the terminal device as early as possible, and the data is not invalid.

In some other embodiments, the method 600 may further include step 613: The source CU receives a response message #1 from the core network device. The response message #1 indicates a switching success of the user plane bearer of the terminal device or a switching failure of the user plane bearer of the terminal device.

In some other embodiments, the method 600 may further include step 614: The target CU receives a notification message #5 from the core network device. The notification message #5 indicates one of the following information:
(1) an identifier (identifier, ID) of a protocol data unit (Protocol Data Unit, PDU) session for which user plane bearer switching has been successfully completed, and channel information of an uplink user plane bearer corresponding to the PDU session ID; and
(2) an ID of a PDU session for which user plane bearer switching fails to be completed, and a cause of the failure.

In some other embodiments, the method 600 may further include step 615: After receiving the notification message #4, the target CU sends a notification message #6 to the source CU, or in other words, the source CU receives the notification message #6 from the target CU. The notification message #6 indicates that the terminal device has successfully accessed the target cell, so that the source CU processes configuration information and context information of the terminal device in a source cell.

It should be noted that the foregoing names and numbers of messages, information, and data are merely examples, and names and numbers of the messages and the information are not limited in this application. For example, the request message #1, the request message #2, the response message #1, the response message #2, the notification message #1, the notification message #2, the notification message #3, the notification message #4, the notification message #5, and the notification message #6 may be respectively numbered a first request message, a second request message, a first response message, a second response message, a first notification message, a second notification message, a sixth notification message, a fourth notification message, a seventh notification message, and a fifth notification message.

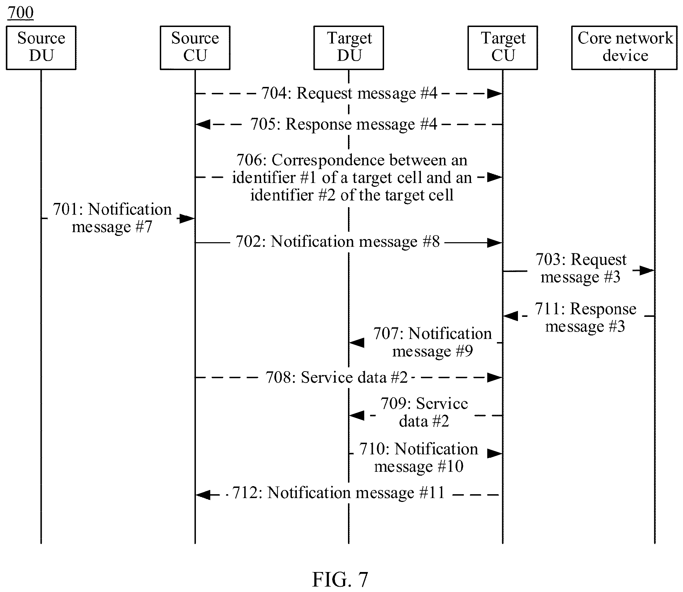

The following describes, in detail with reference to FIG. 7, a solution executed by the target CU or the module or unit in the target CU.

FIG. 7 is a schematic flowchart of a handover method 700 according to this application. The method 700 may include at least a part of the following content.

Step 701: A source DU sends a notification message #7 to a source CU, or in other words, the source CU receives the notification message #7 from the source DU. For step 701, refer to step 601. Details are not described again.

Step 702: After receiving the notification message #7, the source CU sends a notification message #8 to a target CU, or in other words, the target CU receives the notification message #8 from the source CU.

The notification message #8 may correspond to the first notification message in the method 500, and indicates a target cell to which a terminal device is to be handed over. That the notification message #8 indicates the target cell to which the terminal device is to be handed over may also be described as follows: The notification message #1 indicates that the terminal device is to be handed over to the target cell, or the first notification message is used to notify the source CU of initiation of an LTM command for the terminal device and an identifier of the target cell.

Step 703: The target CU sends a request message #3 to a core network device based on the notification message #8.

The request message #3 may correspond to the first request message in the method 500, and is used to request to switch a user plane bearer of the terminal device to the target CU. For descriptions of the request message #3, refer to the request message #1. Details are not described herein again.

For an implementation in which the target CU sends the request message #3 to the core network device, refer to a path switch process in an existing standard. Details are not described.

For example, the core network device may be an AMF. After receiving the request message #3, the AMF may control a UPF to switch the user plane bearer of the terminal device to the target CU.

In this way, in the method 700, the target CU may initiate switching of the user plane bearer of the terminal device based on the notification message #8 indicating the target cell to which the terminal device is to be handed over, so that a process of switching the user plane bearer of the terminal device can be performed earlier, to reduce data forwarded by the source CU to the target CU, thereby reducing invalid data and improving service experience.

In this embodiment of this application, that the target CU initiates switching of the user plane bearer of the terminal device may be specified in a protocol, or may be determined through negotiation between the source CU and the target CU.

A specific implementation of negotiation between the source CU and the target CU is not limited in this application.

In a possible implementation, the method 700 may include steps 704 and 705, which are specifically as follows:

Step 704: The source CU sends a request message #4 to the target CU, or in other words, the target CU receives the request message #4 from the source CU.

The request message #4 is used to request first information, and the first information indicates channel information of a user plane bearer of the target CU. For descriptions of the request message #4, refer to the request message #2. For the first information, refer to the descriptions in step 602.

The source CU may include second information in the request message #4 in step 704. The second information is used to request to initiate switching of the user plane bearer of the terminal device, that is, path switch, by the source CU.

Step 705: After receiving the request message #4, the target CU sends, to the source CU, a response message of the request message #4, that is, a response message #4 in FIG. 7.

The response message #4 includes sixth information. The sixth information indicates that the source CU is not allowed to initiate switching of the user plane bearer of the terminal device. In this case, the target CU subsequently initiates switching of the user plane bearer of the terminal device.

It should be noted that FIG. 7 shows only signaling exchange related to a target DU and the target CU to which the target cell belongs. Actually, steps 704 to 705 may include signaling exchange between the source CU and at least one candidate CU including the target CU. If there is another candidate CU that allows the source CU to initiate switching of the user plane bearer of the terminal device and provides channel information of a user plane bearer of the candidate CU to the source CU, the source CU may determine an association relationship between a candidate cell of the candidate CU and channel information of a user plane bearer of the candidate cell or an association relationship between the candidate CU and the channel information of the user plane bearer of the candidate cell. For a specific implementation, refer to steps 603 to 605.

In some other embodiments, if the source CU determines an association relationship between a candidate cell of another candidate CU and channel information of a user plane bearer of the candidate cell or an association relationship between the another candidate CU and the channel information of the user plane bearer of the candidate cell, the source CU may send the determined association relationship to at least one candidate CU including the target CU. Based on this, when the target CU serves as a source CU in subsequent handover, steps 704 to 705 may not need to be performed again, so that signaling overheads can be reduced, and a subsequent handover process and a corresponding path switch process can be quickly performed.

In some other embodiments, similar to the method 600, if the source CU converts an identifier of at least one candidate cell including the target cell, for example, converts a first identifier into a second identifier, the method 700 may further include step 706: The source CU sends a correspondence between the first identifier of the at least one candidate cell and the second identifier of the at least one candidate cell to the target CU. For a specific implementation, refer to step 607. In this way, when communicating with the terminal, a plurality of CUs including the source CU and the target CU may use a same first identifier of a candidate cell, so that repeated configuration for the terminal device can be avoided.

In some other embodiments, the notification message #8 in step 702 may further include at least one of the following information: a first identifier of the target cell, beam information, or access information. The beam information indicates a beam direction in which the target cell communicates with the terminal device. The access information indicates an access manner in which the terminal device accesses the target cell, for example, a random access-based access manner or a random access-free access manner. In this case, the method 700 may further include step 707: After receiving the notification message #8, the target CU sends a notification message #9 to the target DU, or in other words, the target DU receives the notification message #9 from the target CU.

The notification message #9 indicates the target cell to which the terminal device is to be handed over, or indicates that the terminal device is to be handed over to the target cell.

For example, the notification message #9 may include at least one of the following information: the first identifier of the target cell, the beam information, or the access information, so that the target DU uses the information to perform an access process with the terminal device.

In some other embodiments, the notification message #8 in step 702 may further include fifth information. The fifth information indicates that the source CU does not initiate switching of the user plane bearer of the terminal device. For example, when the source CU and the target CU do not negotiate who initiates switching of the user plane bearer of the terminal device, and the source CU does not initiate switching of the user plane bearer of the terminal device, the notification message #8 may carry the fifth information, so that the target CU initiates switching of the user plane bearer of the terminal device.

In some other embodiments, the method 700 may further include steps 708 and 709, which are specifically as follows:
Step 708: The source CU forwards, to the target CU based on the notification message #7, service data #2 of the terminal device buffered in the source CU, so that a target base station sends the service data #2 to the terminal device after the terminal device accesses the target cell.
Step 709: After receiving the service data #2, the target CU sends the service data #2 to the target DU.

In a possible implementation, the target CU may send the service data #2 to the target DU after determining that the terminal device successfully accesses the target cell. For example, the target CU may send the service data #2 to the target DU after receiving a notification message #10 shown in step 710. The notification message #10 indicates that the terminal device successfully accesses the target cell. This can avoid invalid transmission of the service data #2 to the target DU.

In another possible implementation, the target CU may send the service data #2 to the target DU after receiving the notification message #8. In this way, after the terminal device successfully accesses the target cell of the target DU of the target CU, the target DU can immediately send the data to the terminal device, so that the data is sent to the terminal device as early as possible, and the data is not invalid.

In some other embodiments, the method 700 may further include step 711: The target CU receives a response message #3 from the core network device. The response message #3 indicates a switching success of the user plane bearer of the terminal device or a switching failure of the user plane bearer of the terminal device.

In some other embodiments, the method 700 may further include step 712: After receiving the notification message #10, the target CU sends a notification message #11 to the source CU, or in other words, the source CU receives the notification message #11 from the target CU. The notification message #11 indicates that the terminal device has successfully accessed the target cell, so that the source CU processes configuration information and context information of the terminal device in a source cell.

It should be noted that the foregoing names and numbers of messages, information, and data are merely examples, and names and numbers of the messages and the information are not limited in this application. For example, the request message #3, the request message #4, the response message #3, the response message #4, the notification message #7, the notification message #8, the notification message #9, the notification message #10, and the notification message #11 may be respectively numbered a first request message, a second request message, a first response message, a second response message, an eighth notification message, a first notification message, a third notification message, a fourth notification message, and a fifth notification message.

The following describes the handover method in this application with reference to specific embodiments.

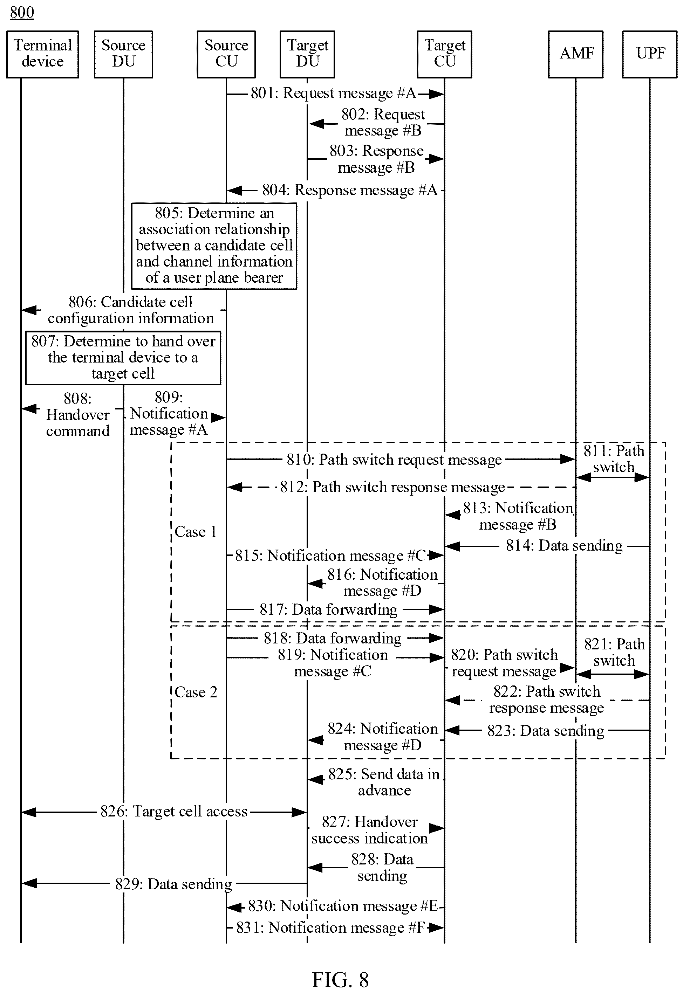

FIG. 8 is a schematic flowchart of a handover method 800 according to this application.

In the method 800, a source CU and a target CU may negotiate to determine whether path switch is to be initiated by the source CU or the target CU. In the method 800, a request message #A may correspond to the foregoing request message #2 or request message #4, a response message #A may correspond to the foregoing response message #2 or response message #4, a notification message #A may correspond to the foregoing notification message #1 or notification message #7, a notification message #B may correspond to the foregoing notification message #5, a notification message #C may correspond to the foregoing notification message #2 or notification message #8, a notification message #D may correspond to the foregoing notification message #3 or notification message #9, and indication information #1, indication information #2, indication information #3, indication information #4, indication information #5, and indication information #6 may respectively correspond to the foregoing second information, fourth information, third information, sixth information, seventh information, and fifth information.

The method 800 includes at least a part of the following content.

Step 801: A source CU sends a request message #A to a candidate CU, or in other words, the candidate CU receives the request message #A from the source CU.

The request message #A is used to request candidate cell configuration information.

In a possible implementation, the request message #A may include indication information #1, and the indication information #1 is used to request to initiate path switch by the source CU. The indication information #1 herein may be used to negotiate with the candidate CU about whether the source CU can initiate path switch.

In another possible implementation, the request message #A may include indication information #2, and the indication information #2 indicates that the source CU is to initiate path switch.

There may be one or more candidate CUs herein, and the candidate CUs are CUs to which a terminal device can be handed over. In a possible implementation, the candidate CU may be determined by the source CU based on measurement information from the terminal device. It should be noted that a target CU shown in FIG. 8 is one of the candidate CUs. Before handover, these CUs to which the terminal device may be handed over are referred to as candidate CUs. During the handover, one of the candidate CUs becomes the target CU.

Step 802: Each candidate CU sends a request message #B to a candidate DU of the candidate CU, or in other words, the candidate DU of the candidate CU receives the request message #B from the candidate CU.

The request message #B is used to request "DU side configuration information" of a candidate cell. A complete piece of candidate cell configuration information may include a part generated by a CU and a part generated by a DU. "CU side configuration information" may be the part generated by the CU, and "DU side configuration information" may be the part generated by the DU.

It should be noted that a target DU shown in FIG. 8 is one of candidate DUs. During the handover, one of the candidate DUs becomes the target DU.

Step 803: The candidate DU of the candidate CU sends a response message #B to the candidate CU, or in other words, the candidate CU receives the response message #B from the candidate DU of the candidate CU.

The response message #B includes the "DU side configuration information" of the candidate cell.

Step 804: The candidate CU sends a response message #A to the source CU, or in other words, the source CU receives the response message #A from the candidate CU.

The response message #A includes candidate cell configuration information, and the candidate cell configuration information includes the foregoing "CU side configuration information" and "DU side configuration information".

When the request message #A carries the indication information #1 and the candidate CU allows the source CU to initiate path switch, in addition to the candidate cell configuration information, the response message #A may further include at least one of the following information: an identity of the candidate cell, indication information #3, or channel information of a user plane bearer of the candidate CU. The information may be used by the source CU when the source CU initiates path switch. The indication information #3 indicates that the candidate CU permits the source CU to initiate path switch.

When the request message #A carries the indication information #1, and the candidate CU does not allow the source CU to initiate path switch, in addition to the candidate cell configuration information, the response message #A may further include at least one of the following information: the identity of the candidate cell, or indication information #4. The indication information #4 indicates that the candidate CU does not allow the source CU to initiate path switch.

When the request message #A carries the indication information #2, in addition to the candidate cell configuration information, the response message #A may further include at least one of the following information: the identity of the candidate cell, or the channel information of the user plane bearer of the candidate CU.

If the request message #A carries the indication information #2, the source CU may subsequently initiate path switch. If the response message #A includes the indication information #3, that is, the candidate CU permits the source CU to initiate path switch, the source CU may subsequently initiate path switch. If the response message #A includes the indication information #4, that is, the candidate CU does not allow the source CU to initiate path switch, the candidate CU may subsequently initiate path switch.

The identity of the candidate cell is information that can be used to uniquely determine the candidate cell. For example, identity information of the candidate cell may include at least one of a cell global identifier (cell global identifier, CGI) or a physical cell identifier (physical cell ID, PCI) of the candidate cell.

The channel information of the user plane bearer of the candidate CU may also be referred to as tunnel information of the user plane bearer of the candidate CU, and indicates a termination point of data sent by a UPF to the candidate CU. For example, the channel information of the user plane bearer may be NG-U user plane transport network layer information (NG-U user plane transport network layer information, NG-U UP TNL Information). NG-U is a name of an interface between the UPF and the CU, and is an interface name defined in a protocol. NG-U is a next generation-user plane (next generation-user plane). For example, the channel information of the user plane bearer may include at least one of the following information: an IP address of the termination point or a GTP-TEID of the termination point.

It should be noted that the user plane bearer of the candidate CU may be a PDU session of the candidate CU. In a possible implementation, each of PDU sessions of a same candidate CU may correspond to channel information of one user plane bearer. For example, different service types correspond to different PDU sessions, and each PDU session has channel information of a user plane bearer of the PDU session. In another possible implementation, alternatively, PDU sessions of a same candidate CU may correspond to channel information of a same user plane bearer.

It should be further noted that FIG. 8 shows only signaling exchange related to the target DU and the target CU to which a target cell selected from candidate cells belongs. Actually, steps 801 to 804 may include signaling exchange between one or more candidate CUs and one or more candidate DUs.

Step 805: Based on the response message #A of each candidate CU, the source CU may determine an association relationship between the candidate cell and the channel information of the user plane bearer of the candidate CU corresponding to the candidate cell.

For example, the source CU may determine, based on the identity information of the candidate cell, the indication information #3, and the channel information of the user plane bearer of the candidate CU in the response message #A, the association relationship between the candidate cell and the channel information of the user plane bearer of the candidate CU corresponding to the candidate cell.

For example, the source CU may determine, based on the indication information #3 in the response message #A, that the source CU is to initiate path switch, and then determine, based on the identity information of the candidate cell and the channel information of the user plane bearer of the candidate CU in the response message #A, the association relationship between the candidate cell and the channel information of the user plane bearer of the candidate CU corresponding to the candidate cell.

In a possible implementation, the source CU may generate an association relationship between the identity of the candidate cell and the channel information of the user plane bearer of the candidate CU corresponding to the candidate cell that are included in the response message #A.

In another possible implementation, the source CU may convert the identity of the candidate cell included in the response message #A into a new identifier, and then generate an association relationship between the new identifier and the channel information of the user plane bearer of the candidate CU.

For example, when the identity of the candidate cell included in the response message #A is the CGI or the PCI, the source CU may convert the CGI or the PCI of the candidate cell into a shorter candidate cell ID, for example, an ID with a value range of 0 to 7, and then generate an association relationship between the candidate cell ID and the channel information of the user plane bearer of the candidate CU. In this case, in a subsequent communication process, the source CU may communicate with the terminal device and/or another network element by using the candidate cell ID. In this way, signaling overheads can be reduced, and real identity information of the candidate cell is not exposed on an air interface, so that a communication system is more secure.

It should be noted that, for a candidate CU that sends the response message #A including the indication information #4, because the candidate CU does not allow the source CU to initiate path switch, the candidate CU does not provide channel information of a user plane bearer of the candidate CU to the source CU, and therefore the source CU does not determine an association relationship between a candidate cell of the candidate CU and the channel information of the user plane bearer of the candidate CU. In other words, after step 805, the source CU does not have the association relationship between the candidate cell of the candidate CU and the channel information of the user plane bearer of the candidate CU.

Step 806: The source CU sends the received candidate cell configuration information to the terminal device, or in other words, the terminal device receives the candidate cell configuration information from the source CU.

Step 807: The source DU determines to hand over the terminal device to the target cell.

Between step 806 and step 807, a step that the terminal device reports measurement results of the candidate cells and a serving cell may be performed, which is not shown in FIG. 8. The source DU may determine, based on the measurement results reported by the terminal device, the target cell from the candidate cells.

Step 808: The source DU sends a handover command to the terminal device, or in other words, the terminal device receives the handover command from the source DU.

The handover command includes an identity of the target cell, for example, the candidate cell ID generated by the source CU in step 805. In this case, the candidate cell ID becomes a target cell ID.

Step 809: The source DU sends a notification message #A to the source CU, or in other words, the source CU receives the notification message #A from the source DU.

The notification message #A indicates that the terminal device is to be handed over to the target cell. The notification message #A includes the identity of the target cell, for example, the candidate cell ID generated by the source CU in step 805. In this case, the candidate cell ID becomes the target cell ID.

Subsequent steps vary with different cases of the response message #A sent by the target CU. The following provides descriptions separately for the different cases.

Case 1: The response message #A sent by the target CU includes the indication information #3, that is, the candidate CU permits the source CU to initiate path switch. In this case, steps 810 to 817 may be performed.

Step 810: The source CU sends a path switch request message to an AMF based on the notification message #A, or in other words, the AMF receives the path switch message from the source CU.

The path switch request message is used to request to switch a user plane bearer of the terminal device to the target CU. The path switch request message may include channel information of a user plane bearer corresponding to the target cell and an identity of the terminal device. The identity of the terminal device may be a RAN UE NG application protocol ID (RAN UE next-generation application protocol ID, RAN UE NGAP ID).

In a possible implementation, the source CU may obtain the identity of the target cell based on the notification message #A, further obtain the channel information of the user plane bearer of the target CU based on an association relationship between the identity of the target cell and the channel information of the user plane bearer of the target CU, for example, the association relationship generated in step 805, and then send the channel information of the user plane bearer of the target CU and the identity of the terminal device to the AMF by using the path switch request message.

It should be noted that an occasion on which the source CU sends the path switch request message is not limited in this application.

In a possible implementation, as shown in FIG. 8, the source CU may send the path switch request message immediately after receiving the notification message #A. In other words, the path switch initiated by the source CU may be triggered by the notification message #A, or the source CU sends the path switch request message in response to the notification message #A.

In another possible implementation, the source CU may initiate path switch after the terminal device successfully accesses the target DU, or in other words, after the terminal device successfully hands over to the target cell of the target DU.

Step 811: After the path switch request message is received, the AMF and the UPF perform path switch.

For an implementation in which the AMF and the UPF perform path switch, refer to an existing protocol. Details are not described herein.

Optionally, the method 800 may further include step 812, that is, the AMF sends a path switch request response message to the source CU, to respond to the path switch request message in step 810. The path switch request response message indicates whether the path switch is successfully completed.

Optionally, the method 800 may further include step 813, that is, the AMF sends a notification message #B to the target CU, or in other words, the target CU receives the notification message #B from the AMF. The notification message #B may include one of the following information:
(1) an ID of a PDU session for which path switch has been successfully completed, and channel information of an uplink user plane bearer corresponding to the PDU session ID; and
(2) an ID of a PDU session for which path switch fails to be completed, and a cause of the failure.

Step 814: After the path switch, the UPF may send downlink data of the terminal device to the target CU instead of the source CU.

Step 815: The source CU may further send a notification message #C to the target CU based on the notification message #A, or in other words, the target CU receives the notification message #C from the source CU.

The notification message #C includes at least one of the following information: the identity of the target cell, beam information, or access information. The beam information indicates a beam direction used when the target cell communicates with the terminal device. The access information indicates an access manner in which the terminal device accesses the target cell. The access manner in which the terminal device accesses the target cell is either of the following: a random access manner or a random access-free manner.

Optionally, if the source CU and the target CU in steps 801 and 804 do not negotiate who initiates path switch, and the source CU has sent the path switch request message, the notification message #C may further include indication information #5. The indication information #5 indicates that the source CU has initiated path switch, the source CU has performed path switch, or the source CU has performed the step of sending the path switch request message, so that the target CU determines that path switch does not need to be initiated.

Step 816: After receiving the notification message #C, the target CU sends a notification message #D to the target DU, or in other words, the target DU receives the notification message #D from the target CU.

The notification message #D includes at least one of the following information: the identity of the target cell, the beam information, or the access information. For descriptions of the beam information and the access information, refer to step 815. In this way, the target DU may complete a random access process with the terminal device based on the information in the notification message #D.

In a possible implementation, the target CU determines, based on a negotiation result in steps 801 and 804, not to perform path switch.

In another possible implementation, if the notification message #C includes the indication information #5, based on the indication information #5 in the notification message #C, the target CU may not perform path switch.

Step 817: After receiving the notification message #A, the source CU may further send data of the terminal device to the target CU, or in other words, the target CU receives the data from the source CU. That is, the source CU may forward the data to the target CU.

For example, for downlink data for the terminal device, the source CU may send, to the target CU, downlink data that has not been sent to the terminal device and/or data that has not been successfully sent to the terminal device. The data that has not been successfully sent to the terminal device may include data that has been sent to the terminal device but for which a feedback of successful reception has not been received from the terminal device.

For example, for uplink data for the terminal device, the source CU forwards uplink data from the terminal device to the target CU.

Case 2: The response message #A sent by the target CU includes the indication information #4, that is, the candidate CU does not allow the source CU to initiate path switch. In this case, steps 818 to 824 may be performed.

Step 818: After receiving the notification message #A, the source CU may send data of the terminal device to the target CU, or in other words, the target CU receives the data from the source CU. For detailed descriptions, refer to step 817.

Step 819: The source CU may further send a notification message #C to the target CU based on the notification message #A, or in other words, the target CU receives the notification message #C from the source CU.

The notification message #C includes at least one of the following information: the identity of the target cell, beam information, or access information. The beam information indicates a beam direction used when the target cell communicates with the terminal device. The access information indicates an access manner in which the terminal device accesses the target cell. The access manner in which the terminal device accesses the target cell is either of the following: a random access manner or a random access-free manner.

Optionally, if the source CU and the target CU in steps 801 and 804 do not negotiate who initiates path switch, and the source CU does not initiate path switch, the notification message #C further includes indication information #6. The indication information #6 indicates that the source CU does not initiate path switch, the source CU does not perform path switch, the source CU does not perform the step of sending the path switch request message, or the target CU is to initiate path switch.

Step 820: After receiving the notification message #C, the target CU sends a path switch request message to the AMF based on the identity of the target cell in the notification message #C, or in other words, the AMF receives the path switch message from the target CU.

For descriptions of the path switch request message, refer to step 810.

In a possible implementation, the target CU determines, based on a negotiation result in steps 801 and 804, that the target CU is to perform path switch, and then sends the path switch request message to the AMF after receiving the notification message #C.

In another possible implementation, if the notification message #C includes the indication information #6, the target CU may determine, based on the indication information #6, to perform path switch, and then send the path switch request message to the AMF.

It should be noted that an occasion on which the target CU sends the path switch request message is not limited in this application.

In a possible implementation, as shown in FIG. 8, the target CU may send the path switch request message immediately after receiving the notification message #C. In other words, the path switch initiated by the target CU may be triggered by the notification message #C, or the target CU sends the path switch request message in response to the notification message #C.

In another possible implementation, the target CU may initiate path switch after the terminal device successfully accesses the target DU, or in other words, after the terminal device successfully hands over to the target cell of the target DU.

Step 821: After the path switch request message is received, the AMF and the UPF perform path switch.

For an implementation in which the AMF and the UPF perform path switch, refer to an existing protocol. Details are not described herein.

Optionally, the method 800 may further include step 822, that is, the AMF sends a path switch request response message to the target CU, to respond to the path switch request message in step 820. The path switch request response message indicates whether the path switch is successfully completed.

Step 823: After the path switch, the UPF may send downlink data of the terminal device to the target CU instead of the source CU.

Step 824: After receiving the notification message #C, the target CU may further send a notification message #D to the target DU, or in other words, the target DU receives the notification message #D from the target CU.

The notification message #D includes at least one of the following information: the identity of the target cell, the beam information, or the access information. For descriptions of the beam information and the access information, refer to step 815. In this way, the target DU may complete a random access process with the terminal device based on the information in the notification message #D.

It should be noted that, if the request message #A in step 801 carries the indication information #2, steps 810 to 817 may continue to be performed after step 809.

Optionally, the method 800 may include step 825, that is, the target CU sends data to the target DU in advance.

The "advance" herein means that the terminal device may have not accessed the target cell of the target DU of the target CU in this case, but the target CU sends data of the terminal device from the source CU or the UPF to the target DU in advance. For example, after receiving the second notification message #C, the target CU may send the data in advance.

In this way, after the terminal device successfully accesses the target cell of the target DU of the target CU, the target DU can immediately send the data to the terminal device, so that the data is sent to the terminal device as early as possible, and the data is not invalid.

It should be noted that, in any one of the case 1, the case 2, or the case that the request message #A carries the indication information #2, the method 800 may include step 825. This is not limited.

Step 826: The terminal device and the target DU perform a target cell access process.

In a possible implementation, for a specific implementation of step 826, refer to an existing standard. Details are not described.

In another possible implementation, the terminal device hands over to the target cell in a random access-free access manner. The target cell may be configured with a plurality of carriers, for example, two carriers: an NUL carrier and an SUL carrier. The terminal device and a target access network device (the target CU and/or the target DU) need to have consistent understanding of whether the terminal device is to be switched to the NUL carrier or the SUL carrier of the target cell in the random access-free manner, to ensure that the cell handover can be successfully performed. The following provides several possible solutions:
Solution 1: In the candidate cell configuration information provided in step 804 and step 806, a candidate cell provides only an SUL configuration or only an NUL configuration. After receiving the handover command in step 808, the terminal device determines, based on an SUL or NUL configuration provided by the target cell, to use the SUL or the NUL to access/hand over to the target cell.
Solution 2: In the candidate cell configuration information provided in step 804 and step 806, a candidate cell provides an SUL configuration and an NUL configuration, and an additional field indicates whether the SUL or the NUL needs to be used. After receiving the handover command in step 808, the terminal device determines, based on a field of the target cell that indicates whether the SUL or the NUL needs to be used, to use the SUL or the NUL to access/hand over to the target cell.
Solution 3: In the candidate cell configuration information provided in step 804 and step 806, a candidate cell provides an SUL configuration and an NUL configuration, and notifies a source access network device (for example, the source CU and/or the source DU) that the SUL configuration and the NUL configuration are provided, so that the source access network device determines, during handover, an uplink carrier that needs be used for the target cell. For example, the source access network device determines, based on a channel measurement result fed back by the terminal device, to select an uplink carrier, and notifies the terminal device of a determining result by using the handover command in step 808. The terminal device selects, based on carrier information indicated in the handover command (for example, a MAC CE), the SUL or the NUL to access/hand over to the target cell. Further, optionally, the source access network device may notify the target access network device (for example, the target CU and/or the target DU) of information about the selected carrier through step 809, step 815, and step 824.
Solution 4: In the candidate cell configuration information provided in step 804 and step 806, a candidate cell provides an SUL configuration and an NUL configuration. Before sending the handover command in step 808, the source access network device (for example, the source CU and/or the source DU) interacts with the target access network device (for example, the target CU and/or the target DU). The interaction process is not shown in the figure. For example, a request message is sent, and a response message is received. The target access network device notifies, in the response message, the source access network device of which uplink carrier of the target cell needs to be selected, and the source access network device notifies the terminal device in the handover command in step 808. The terminal device selects, based on carrier information indicated in the handover command (for example, a MAC CE), the SUL or the NUL to access/hand over to the target cell.
Solution 5: In the candidate cell configuration information provided in step 804 and step 806, a candidate cell provides an SUL configuration and an NUL configuration. After receiving the handover command in step 808, the terminal device selects an uplink carrier of the target cell based on channel quality of the target cell. For example, when reference signal received power (reference signal received power, RSRP) of a downlink reference signal of the target cell is less than a configured threshold, the terminal device selects the SUL of the target cell for access; otherwise, the terminal device selects the NUL of the target cell for access. It should be understood that in this solution, the target access network device (for example, the target CU and/or the target DU) attempts to receive, on both the SUL and the NUL, an uplink signal sent by the terminal device (for example, the target access network device receives an uplink message on preconfigured uplink grant resources of the SUL and the NUL), or attempts to send a downlink signal to the terminal device on both the SUL and the NUL (for example, the target access network device sends scheduling information to the terminal device on both the SUL and the NUL).

It should be noted that the random access solutions in step 826 may be implemented together with the handover method in this embodiment of this application, or may be independently implemented as independent embodiments.

Step 827: After the terminal device successfully accesses the target cell of the target DU of the target CU, the target DU sends a handover success indication to the target CU, to notify the target CU that the terminal device has successfully handed over to the target cell.

Step 828: After receiving the handover success indication, the target CU sends data of the terminal device from the source CU or the UPF to the target DU.

Step 825 and step 828 are two implementations in which the target CU sends the data from the source CU or the UPF to the target DU, and the two implementations have different data sending occasions. Step 825 is performed after the notification message #C is received, while step 828 is performed after the handover success indication is received. Either of the two may be performed.

Step 829: The target DU sends the received data to the terminal device.

Optionally, the method 800 may include step 830, that is, the target CU sends a notification message #E to the source CU, to notify the source CU that the terminal device has successfully accessed the target cell, so that the source CU processes configuration information and context information of the terminal device in a source cell.

In a possible implementation, the source CU may retain the configuration information and the context information of the terminal device in the source cell for reuse after the terminal device is handed over back.

In another possible implementation, after receiving the notification message #E, the source CU releases the configuration information and the context information of the terminal device in the source cell.

Optionally, the method 800 may include step 831, that is, the source CU sends a notification message #F to the candidate CU, or in other words, the candidate CU receives the notification message #F from the source CU. The notification message #F includes the association relationship determined in step 805 between the candidate cell and the channel information of the user plane bearer of the candidate CU corresponding to the candidate cell. After learning of the association relationship, the target CU may send a path switch request message to the AMF based on the association relationship when subsequently serving as a source CU and indicating a terminal device to perform cell handover. Based on this, when the target CU in the first handover serves as a source CU in subsequent handover, step 801 to step 804 may not need to be performed again to obtain an association relationship between an identity of a candidate cell and channel information of a user plane bearer of a corresponding candidate CU, so that signaling overheads can be reduced, and a subsequent handover process and a corresponding path switch process can be quickly performed.

An occasion for performing step 831 is not limited in this application.

In a possible implementation, as shown in FIG. 8, the source CU may perform step 831 after step 830. That is, the source CU sends the notification message #F to the candidate CU after learning that the terminal device successfully accesses the target cell.

In another possible implementation, the source CU may perform step 831 after step 805, without waiting for the terminal device to successfully access the target cell. For example, a CU #1 is a source CU, and a CU #2 and a CU #3 are candidate CUs. After steps 801 to 805 are performed, the CU #1 has obtained an association relationship between identities of candidate cells of the CU #2 and the CU #3 and channel information of a user plane bearer of the CU #2 and an association relationship between an identity of a candidate cell of the CU #3 and channel information of a user plane bearer of the CU #3. After step 805, the CU #1 may send the obtained association relationships to the CU #2 and the CU #3, so that after the terminal device hands over to the CU #2 or the CU #3, the CU #2 or the CU #3 can continue to initiate a path switch request to the AMF.

It should be noted that, if the association relationship in step 805 is the association relationship between the new identifier obtained through conversion based on the identity of the candidate cell carried in the response message #A and the channel information of the user plane bearer of the candidate CU, the method 800 further includes: The source CU sends, to the candidate CU, a correspondence between the new identifier and the identity of the candidate cell before the conversion.

An implementation of sending the correspondence between the new identifier and the identity of the candidate cell before the conversion is not limited in this application.

In a possible implementation, the correspondence between the new identifier and the identity of the candidate cell before the conversion is carried in the notification message #E, that is, the correspondence between the new identifier and the identity of the candidate cell before the conversion may be sent to the candidate CU together with the association relationship between the new identifier and the channel information of the user plane bearer of the candidate CU.

In another possible implementation, if the source CU knows the cell of the candidate CU, the source CU may convert the identity of the candidate cell in advance, and the correspondence between the new identifier and the identity of the candidate cell before the conversion is carried in the request message #A in step 801.

It should be noted that a sequence of steps 808 and 809, a sequence of steps 810, 815, and 817, and a sequence of steps 818 and 819 are not limited in this embodiment of this application.

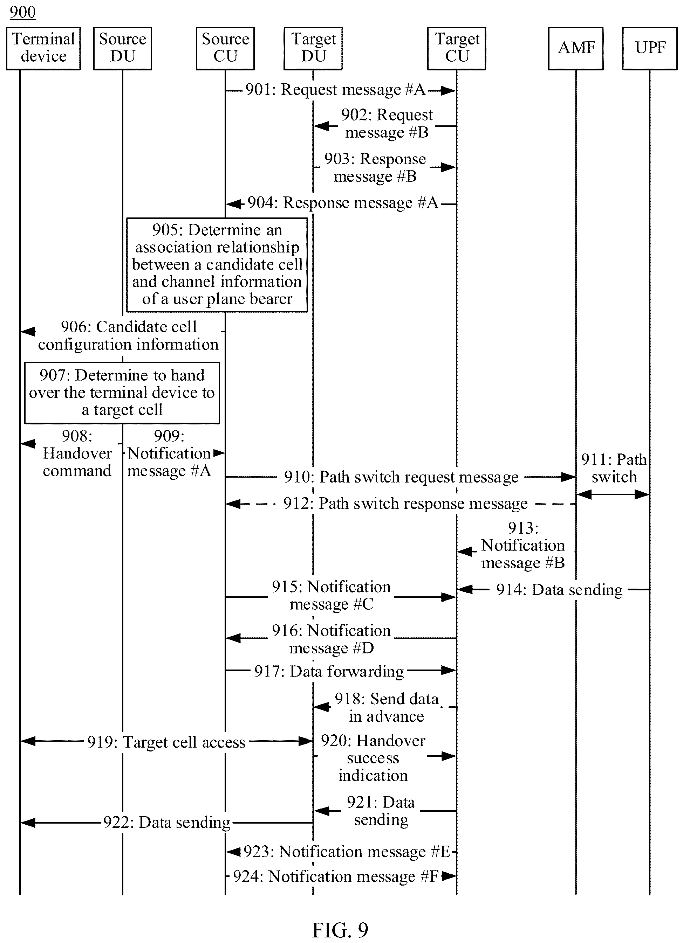

FIG. 9 is a schematic flowchart of a handover method 900 according to this application.

A difference from the method 800 lies in that path switch is initiated by the source CU, without a process of negotiation between the source CU and the target CU. Specifically, for steps 901 to 904, refer to steps 801 to 804. A difference lies in that the request message #A does not need to carry the indication information #1 or the indication information #2, and the response message #A does not need to carry the indication information #3 or the indication information #4. For steps 905 to 917, refer to steps 805 to 818. A difference lies in that the notification message #C does not need to carry the indication information #5 or the indication information #6. Steps 918 to 924 are the same as steps 825 to 831. Refer to steps 825 to 831.

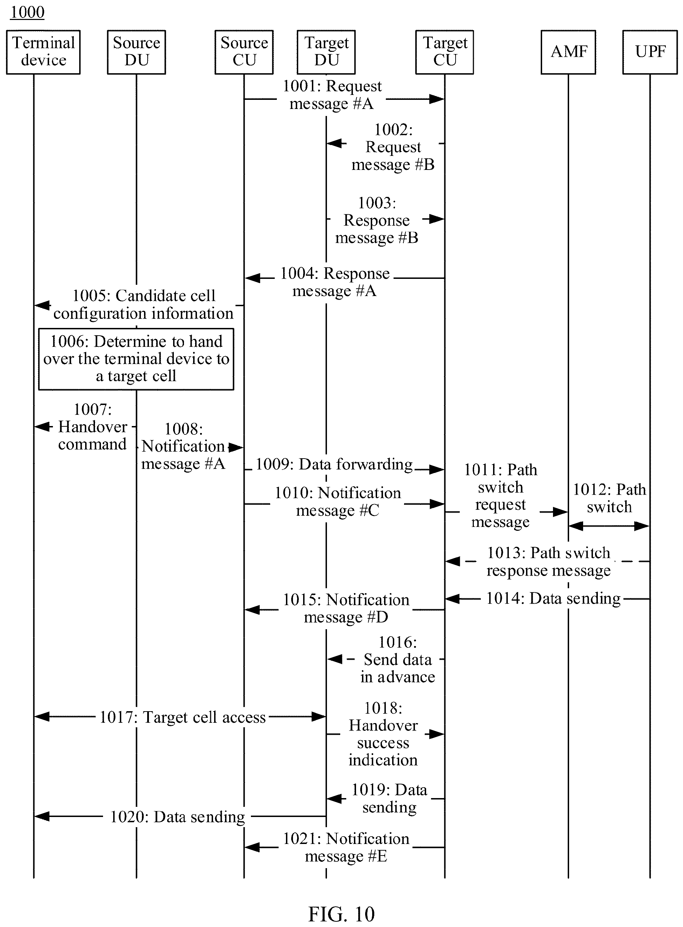

FIG. 10 is a schematic flowchart of a handover method 1000 according to this application.

A difference from the method 800 lies in that path switch is initiated by the target CU, without a process of negotiation between the source CU and the target CU. Specifically, for steps 1001 to 1004, refer to steps 801 to 804. A difference lies in that the request message #A does not need to carry the indication information #1 or the indication information #2, the response message #A does not need to carry the indication information #3 or the indication information #4, and the response message #A does not need to carry the channel information of the user plane bearer of the candidate CU. Steps 1005 to 1008 are the same as steps 806 to 809. Refer to steps 806 to 809. For steps 1009 to 1021, refer to steps 818 to 830. A difference lies in that the notification message #C does not need to carry the indication information #5 or the indication information #6.

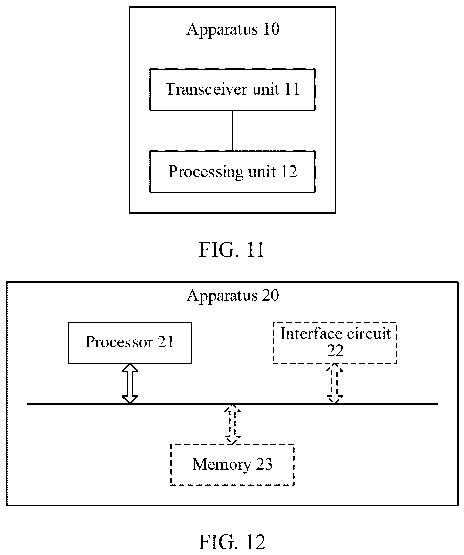

The foregoing describes, in detail with reference to FIG. 5 to FIG. 10, method embodiments provided in this application. The following describes apparatus embodiments of this application with reference to FIG. 11 to FIG. 12.

It may be understood that, to implement functions in the foregoing embodiments, an apparatus in FIG. 11 or FIG. 12 includes a corresponding hardware structure and/or software module for performing the functions. A person skilled in the art should be easily aware that, with reference to units and method steps of examples described in embodiments disclosed in this application, this application can be implemented by hardware or a combination of hardware and computer software.

FIG. 11 and FIG. 12 are diagrams of structures of possible apparatuses according to embodiments of this application. These apparatuses may be configured to implement functions of the source CU, the target CU, the source access network device, the target access network device, or the terminal device in the foregoing method embodiments, and therefore can also achieve beneficial effects of the foregoing method embodiments.

As shown in FIG. 11, an apparatus 10 includes a transceiver unit 11 and a processing unit 12. The transceiver unit 11 is configured to perform receiving and sending steps of the apparatus 10. The transceiver unit 12 is configured to perform processing steps of the apparatus 10.

For example, when the apparatus 10 is configured to implement functions of the source CU in FIG. 6, the transceiver unit 11 is configured to perform receiving and sending steps of the source CU, for example, steps 601 to 604, 606 to 608, 610, 613, and 615, and the processing unit 12 is configured to perform processing steps of the source CU, for example, step 605. When the apparatus 10 is configured to implement functions of the target CU in FIG. 6, the transceiver unit 11 is configured to perform receiving and sending steps of the target CU, for example, steps 603, 604, 606 to 612, and 614 to 615.

For example, when the apparatus 10 is configured to implement functions of the source CU in FIG. 7, the transceiver unit 11 is configured to perform receiving and sending steps of the source CU, for example, steps 701 to 702, 704 to 706, 708, and 712. When the apparatus 10 is configured to implement functions of the target CU in FIG. 7, the transceiver unit 11 is configured to perform receiving and sending steps of the target CU, for example, steps 702 to 712.

For example, when the apparatus 10 is configured to implement functions of the source access network device, the target access network device, or the terminal device in step 826 in FIG. 8, the transceiver unit 11 is configured to perform receiving and sending steps of the source access network device, the target access network device, or the terminal device, and the processing unit 12 is configured to perform processing steps of the source access network device, the target access network device, or the terminal device.

For more detailed descriptions of the transceiver unit 11 and the processing unit 12, refer to related descriptions in the foregoing method embodiments. Details are not described herein.

As shown in FIG. 12, an apparatus 20 includes a processor 21. The processor 21 is coupled to a memory 23. The memory 23 is configured to store instructions. When the apparatus 20 is configured to implement the foregoing method, the processor 21 is configured to execute the instructions in the memory 23, to implement functions of the processing unit 12.

Optionally, the apparatus 20 further includes the memory 23.

Optionally, the apparatus 20 further includes an interface circuit 22. The processor 21 and the interface circuit 22 are coupled to each other. It may be understood that the interface circuit 22 may be a transceiver or an input/output interface. When the apparatus 20 is configured to implement the foregoing method, the processor 21 is configured to execute the instructions to implement the functions of the processing unit 12, and the interface circuit 22 is configured to implement functions of the transceiver unit 11.

For example, when the apparatus 20 is a chip used in the source CU, the target CU, the source access network device, the target access network device, or the terminal device, the chip implements the functions of the source CU, the target CU, the source access network device, the target access network device, or the terminal device in the foregoing method embodiments. The chip receives information from another module (for example, a radio frequency module or an antenna) in the source CU, the target CU, the source access network device, the target access network device, or the terminal device, where the information is sent by another apparatus to the source CU, the target CU, the source access network device, the target access network device, or the terminal device; or the chip sends information to another module (for example, a radio frequency module or an antenna) in the source CU, the target CU, the source access network device, the target access network device, or the terminal device, where the information is sent by the source CU, the target CU, the source access network device, the target access network device, or the terminal device to another apparatus.

This application further provides a communication apparatus, including a processor. The processor is coupled to a memory. The memory is configured to store a computer program or instructions and/or data. The processor is configured to execute the computer program or the instructions stored in the memory, or read the data stored in the memory, to perform the method in the foregoing method embodiments. Optionally, there are one or more processors. Optionally, the communication apparatus includes the memory. Optionally, there are one or more memories. Optionally, the memory and the processor are integrated together or disposed separately.

This application further provides a chip, including a processor. The processor is coupled to a memory. The memory is configured to store a computer program or instructions. The processor is configured to execute the computer program or the instructions stored in the memory, to implement the method performed by the source CU, the target CU, the source access network device, the target access network device, or the terminal device in the foregoing method embodiments.

This application further provides a computer-readable storage medium. The computer-readable storage medium stores computer instructions for implementing the method performed by the source CU, the target CU, the source access network device, the target access network device, or the terminal device in the foregoing method embodiments.

This application further provides a computer program product, including instructions. When the instructions are executed by a computer, the method performed by the source CU, the target CU, the source access network device, the target access network device, or the terminal device in the foregoing method embodiments is implemented.

This application further provides a communication system. The communication system includes at least one of the source CU, the target CU, the source access network device, the target access network device, or the terminal device in the foregoing embodiments.

For explanations and beneficial effects of related content in any one of the apparatuses provided above, refer to the corresponding method embodiment provided above. Details are not described herein again.

It may be understood that, the processor in embodiments of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a compact disc read-only memory (compact disc read-only memory, CD-ROM), or any other form of storage medium well-known in the art. For example, the storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in a source CU, a target CU, a source access network device, a target access network device, or a terminal device. Certainly, the processor and the storage medium may alternatively exist in the source CU, the target CU, the source access network device, the target access network device, or the terminal device as discrete components.

The foregoing embodiments may be all or partly implemented by using software, hardware, firmware, or any combination thereof. When software is used for implementation, the embodiments may be all or partly implemented in a form of a computer program product. The computer program product includes one or more computer programs or instructions. When the computer program or the instructions are loaded and executed on a computer, the procedures or functions in embodiments of this application are all or partly executed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive.

In embodiments of this application, unless otherwise specified or a logic conflict occurs, terms and/or descriptions in different embodiments are consistent and may be mutually referenced, and technical features in different embodiments may be combined based on an internal logical relationship thereof, to form a new embodiment.

Unless otherwise specified, meanings of all technical and scientific terms used in embodiments of this application are the same as those usually understood by a person skilled in the technical field of this application. The terms used in this application are merely intended to describe specific embodiments, and are not intended to limit the scope of this application. It should be understood that the foregoing descriptions are descriptions of examples, and the examples are merely intended to help a person skilled in the art understand embodiments of this application, but are not intended to limit embodiments of this application to specific values or specific scenarios in the examples. It is clear that a person skilled in the art can make various equivalent modifications or variations based on the examples described above, and such modifications and variations also fall within the scope of embodiments of this application.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A handover method, wherein the method comprises:
receiving a first notification message, wherein the first notification message indicates a target cell to which a terminal device is to be handed over, and the target cell is a cell of a target distributed unit DU of a target central unit CU; and
sending a first request message to a core network device based on the first notification message, wherein the first request message is used to request to switch a user plane bearer of the terminal device to the target CU.

2. The method according to claim 1, wherein
receiving the first notification message comprises: receiving the first notification message from a source DU.

3. The method according to claim 2, wherein
the first notification message comprises a first identifier of the target cell; and
sending the first request message to the core network device based on the first notification message comprises: sending the first request message to the core network device based on the first identifier and a first association relationship, wherein the first association relationship indicates an association relationship between the first identifier and first information, the first information indicates channel information of a user plane bearer of the target CU, and the first request message comprises the first information.

4. The method according to claim 3, wherein before receiving the first notification message from the source DU, the method further comprises:
sending a second request message to the target CU, wherein the second request message is used to request the first information;
receiving a second response message from the target CU, wherein the second response message comprises a second identifier of the target cell and the first information; and
determining the first association relationship based on the second identifier and the first information.

5. The method according to claim 4, wherein
the second request message further comprises second information, and the second information is used to request to initiate path switch by the source CU; and
the second response message further comprises third information, and the third information indicates that the source CU is allowed to initiate path switch.

6. The method according to claim 4, wherein
the second request message further comprises fourth information, and the fourth information indicates that the source CU is to initiate path switch.

7. The method according to any one of claims 3 to 6, wherein the method further comprises:
sending at least one association relationship to a candidate CU, wherein the candidate CU comprises the target CU, and the at least one association relationship comprises the first association relationship.

8. The method according to any one of claims 3 to 7, wherein
the first information comprises at least one of the following information: an internet protocol IP address of a downlink termination point of the user plane bearer of the target CU, or a general packet radio system tunneling protocol-tunnel endpoint identifier GTP-TEID of the downlink termination point of the user plane bearer of the target CU.

9. The method according to any one of claims 2 to 8, wherein the method further comprises:
forwarding service data of the terminal device to the target CU based on the first notification message.

10. The method according to any one of claims 2 to 9, wherein the method further comprises:
sending a second notification message to the target CU, wherein the second notification message indicates the target cell to which the terminal device is to be handed over.

11. The method according to claim 10, wherein
the second notification message comprises at least one of the following information: the first identifier of the target cell, beam information, or access information, wherein the beam information indicates a beam direction in which the target cell communicates with the terminal device, and the access information indicates an access manner in which the terminal device accesses the target cell.

12. The method according to any one of claims 1 to 11, wherein the method further comprises:
sending a correspondence between the first identifier of the target cell and the second identifier of the target cell to the target CU, wherein the first identifier is an identifier of the target cell on an air interface, and the second identifier is an identifier of the target cell on a network side.

13. The method according to any one of claims 1 to 12, wherein the method is applied to a source CU or a module or unit in the source CU.

14. The method according to claim 1, wherein
receiving the first notification message comprises: receiving the first notification message from a source CU.

15. The method according to claim 14, wherein
the first notification message comprises fifth information, and the fifth information indicates that the source CU does not initiate path switch.

16. The method according to claim 14, wherein before receiving the first notification message from the source CU, the method further comprises:
receiving a second request message from the source CU, wherein the second request message is used to request first information, the first information indicates channel information of a user plane bearer of the target CU, the second request message further comprises second information, and the second information is used to request to initiate path switch by the source CU; and
sending a second response message to the source CU, wherein the second response message comprises sixth information, and the sixth information indicates that the source CU is not allowed to initiate path switch.

17. The method according to claim 16, wherein
the first information comprises at least one of the following information: an internet protocol IP address of a downlink termination point of the user plane bearer corresponding to the target CU, or a general packet radio system tunneling protocol-tunnel endpoint identifier GTP-TEID of the downlink termination point of the user plane bearer corresponding to the target CU.

18. The method according to any one of claims 14 to 17, wherein
the first notification message comprises at least one of the following information: a first identifier of the target cell, beam information, or access information, wherein the beam information indicates a beam direction in which the target cell communicates with the terminal device, and the access information indicates an access manner in which the terminal device accesses the target cell.

19. The method according to claim 18, wherein the method further comprises:
sending a third notification message to the target DU based on the first notification message, wherein the third notification message comprises at least one of the following information: the first identifier, the beam information, or the access information.

20. The method according to any one of claims 15 to 19, wherein the method further comprises:
receiving at least one association relationship from the source CU, wherein the association relationship indicates an association relationship between an identifier of a candidate cell and channel information of a user plane bearer of a candidate CU corresponding to the candidate cell.

21. The method according to any one of claims 14 to 20, wherein the method further comprises:
receiving service data of the terminal device from the source CU;
sending the service data to the target DU; and
receiving a fourth notification message from the target DU after sending the service data to the target DU, wherein the fourth notification message indicates that the terminal device has successfully accessed the target cell.

22. The method according to any one of claims 14 to 21, wherein the method further comprises:
receiving a correspondence between the first identifier of the target cell and a second identifier of the target cell from the source CU, wherein the first identifier is an identifier of the target cell on an air interface, and the second identifier is an identifier of the target cell on a network side.

23. The method according to any one of claims 14 to 22, wherein the method is applied to the target CU or a module or unit in the target CU.

24. A communication apparatus, comprising a module or unit configured to perform the method according to any one of claims 1 to 23.

25. A communication apparatus, comprising a processor and an interface circuit, wherein the interface circuit is configured to receive a signal from another communication apparatus other than the communication apparatus and transmit the signal to the processor, or send a signal from the processor to another communication apparatus other than the communication apparatus, and the processor is configured to implement the method according to any one of claims 1 to 23 by using a logic circuit or executing code instructions.

26. A chip, comprising a processor, wherein the processor is coupled to a memory, the memory is configured to store a computer program, and the processor is configured to execute the computer program stored in the memory, to implement the method according to any one of claims 1 to 23.

27. A computer-readable storage medium, wherein the storage medium stores a computer program or instructions, and when the computer program or the instructions are executed by a communication apparatus, the method according to any one of claims 1 to 23 is implemented.

28. A computer program product, comprising a computer program, wherein when the computer program is run, the method according to any one of claims 1 to 23 is implemented.

29. A communication system, comprising:
a source CU configured to perform the method according to any one of claims 1 to 13, and a source DU interacting with the source CU; or
a target CU configured to perform the method according to any one of claims 1 and 14 to 23, and a source DU interacting with the target CU.
